# EUROPEAN PATENT SPECIFICATION

(11) **EP 4 474 171 B1**
(45) Date of publication and mention of the grant of the patent: **28.05.2025**
(21) Application number: 24168879.5
(22) Date of filing: 08.04.2024
(51) Int. Cl.: B60C 11/00, B60C 11/01, B60C 11/03, B60C 11/12

(54) **HEAVY DUTY TIRE**
SCHWERLASTREIFEN
PNEU POUR POIDS LOURDS

(30) Priority: 09.06.2023 JP 2023095511
(43) Date of publication of application: 11.12.2024
(73) Proprietor: Sumitomo Rubber Industries, Ltd., Kobe-shi, Hyogo-ken 651-0072 (JP)
(72) Inventor: SUGIURA, TAKASHI, Kobe-shi, 651-0072 (JP)
(74) Representative: Manitz Finsterwald Patent- und Rechtsanwaltspartnerschaft mbB

(56) References cited:
- CA-C- 1 319 600
- DE-A1- 102020 204 226
- FR-A1- 3 017 075
- JP-A- 2023 013 934
- US-A1- 2014 332 133

## Description

### BACKGROUND OF THE INVENTION

### Field of the Invention

The present invention relates to a heavy duty tire.

### Background Art

The tread of a tire has a plurality of circumferential main grooves aligned in the axial direction. The plurality of circumferential main grooves form a plurality of land portions in the tread.

Each land portion deforms when coming into contact with a road surface. The deformation of the land portion influences the rolling resistance of the tire. In consideration of influence on the environment, reduction of rolling resistance is strongly required for tires.

When a circumferential narrow groove having a smaller groove width than the circumferential main grooves is provided, the land portions can support each other when the tread comes into contact with a road surface, thereby suppressing deformation of the land portions.

In order to reduce the rolling resistance of a tire, the adoption of a circumferential narrow groove has been considered (for example, Japanese Laid-Open Patent Publication No. 2017-094891).

The circumferential narrow groove also influences, for example, running performance on a wet road surface (hereinafter also referred to as wet performance). The adoption of a circumferential narrow groove is being promoted while the influence on various performance characteristics is taken into consideration.

A heavy duty tire in accordance with the preamble of claim 1 is known from JP 2023 013934 A. Related tires are described in FR 3 017 075 A1 and DE 10 2020 204226 A1.

An object of the present invention is to provide a heavy duty tire that can have reduced rolling resistance while suppressing a decrease in wet performance due to wear and can achieve reduction of the risk of occurrence of uneven wear.

### SUMMARY OF THE INVENTION

The object is solved by a heavy duty tire having the features of claim 1. Subclaims are directed at specific embodiments of the invention.

A heavy duty tire according to the present invention includes a tread. The tread has an outer circumferential surface including a tread surface configured to come into contact with a road surface. A plurality of circumferential main grooves are formed on the tread so as to extend continuously in a circumferential direction, whereby a plurality of land portions are formed in the tread so as to be aligned in an axial direction. The plurality of circumferential main grooves include a pair of shoulder circumferential main grooves each located on an outermost side in the axial direction. The plurality of land portions include a pair of shoulder land portions each located on the outermost side in the axial direction. A portion of the tread between a first shoulder circumferential main groove and a second shoulder circumferential main groove which are the pair of shoulder circumferential main grooves is a crown portion, and a portion of the tread between each of the shoulder circumferential main grooves and an end of the tread surface is the shoulder land portion. At least one circumferential narrow groove is formed on the crown portion. The at least one circumferential narrow groove includes a body portion including a groove opening of the circumferential narrow groove, and an enlarged width portion including a groove bottom of the circumferential narrow groove. The body portion includes a body portion main body extending straight. The enlarged width portion is connected to the body portion main body, and has a portion where the enlarged width portion has a maximum groove width, between the body portion main body and the groove bottom. The tread surface includes a land surface of the crown portion and land surfaces of the shoulder land portions. A line of intersection of the land surface of the crown portion and an equator plane is an equator. In a meridian cross-section of the tire, when the tire is fitted on the standardized rim, the internal pressure of the tire is adjusted to 5% of the standardized internal pressure, and no load is applied to the tire, a contour of the land surface of the crown portion is represented by an arc having a center on the equator plane and having a radius of not less than 400 mm and preferably not less than 500 mm, and each of contours of the land surfaces of the shoulder land portions is represented by a straight line or an arc having a curvature of not greater than 0.002 mm⁻¹ and preferably not greater than 0.001 mm⁻¹. When a point of intersection of an extension line of the arc representing the contour of the land surface of the crown portion and a straight line passing through the end of the tread surface and extending in a radial direction is defined as a reference end of the tread surface, a ratio (D1/D2) of a distance D1 in the radial direction from the equator to the end of the tread surface to a distance D2 in the radial direction from the equator to the reference end of the tread surface is not less than 0.60 and not greater than 1.70 and preferably not less than 0.65 and not greater than 1.65.

The present invention can provide a heavy duty tire that can have reduced rolling resistance while suppressing a decrease in wet performance due to wear and can achieve reduction of the risk of occurrence of uneven wear.

### BRIEF DESCRIPTION OF THE DRAWINGS

FIG. 1 is a development view showing a part of a tread of a heavy duty tire according to one embodiment of the present invention;
FIG. 2 is a cross-sectional view of FIG. 1 taken along a line II-II;
FIG. 3 is a cross-sectional view of FIG. 1 taken along a line III-III;
FIG. 4 is an enlarged development view showing a part of FIG. 1;
FIG. 5 is a cross-sectional view of FIG. 4 taken along a line V-V;
FIG. 6 is a cross-sectional view of FIG. 4 taken along a line VI-VI;
FIG. 7 is an enlarged development view showing a part of FIG. 1;
FIG. 8 is a cross-sectional view of FIG. 7 taken along a line VIII-VIII;
FIG. 9 is a cross-sectional view of FIG. 7 taken along a line IX-IX;
FIG. 10 is a cross-sectional view showing a part of a contour of a tread surface; and
FIG. 11 is a schematic diagram illustrating a ground-contact surface shape.

### DETAILED DESCRIPTION

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

A state where the tire is fitted on the standardized rim, the internal pressure of the tire is adjusted to 5% of the standardized internal pressure, and no load is applied to the tire is referred to as reference state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

### [Findings on Which Present Invention Is Based]

As described above, by providing a circumferential narrow groove on the tread, deformation of the land portions is suppressed when the tread comes into contact with a road surface, so that the apparent stiffness of the land portions is increased. The tire can have reduced rolling resistance.

As the tread becomes worn, the grooves provided on the tread disappear. The groove volume of the circumferential narrow groove is smaller than that of each circumferential main groove. In the case where a circumferential narrow groove is provided on the tread, there is a concern that as the tread becomes worn, the groove volume may become insufficient and wet performance may decrease.

As described above, the circumferential narrow groove increases the apparent stiffness of the land portions. If the circumferential narrow groove is provided, there is also a concern that the shape of a ground-contact surface may change and the risk of occurrence of uneven wear may increase.

Therefore, the present inventor has conducted a thorough study for a technology capable of reducing rolling resistance while suppressing a decrease in wet performance due to wear and achieving reduction of the risk of occurrence of uneven wear, and thus has completed the invention described below.

### [Outline of Embodiments of Present Invention]

A heavy duty tire according to the present invention is a tire including a tread, wherein: the tread has an outer circumferential surface including a tread surface configured to come into contact with a road surface; a plurality of circumferential main grooves are formed on the tread so as to extend continuously in a circumferential direction, whereby a plurality of land portions are formed in the tread so as to be aligned in an axial direction; the plurality of circumferential main grooves include a pair of shoulder circumferential main grooves each located on an outermost side in the axial direction; the plurality of land portions include a pair of shoulder land portions each located on the outermost side in the axial direction; a portion of the tread between a first shoulder circumferential main groove and a second shoulder circumferential main groove which are the pair of shoulder circumferential main grooves is a crown portion, and a portion of the tread between each of the shoulder circumferential main grooves and an end of the tread surface is the shoulder land portion; at least one circumferential narrow groove is formed on the crown portion; the at least one circumferential narrow groove includes a body portion including a groove opening of the circumferential narrow groove, and an enlarged width portion including a groove bottom of the circumferential narrow groove; the body portion includes a body portion main body extending straight; the enlarged width portion is connected to the body portion main body, and has a portion where the enlarged width portion has a maximum groove width, between the body portion main body and the groove bottom; the tread surface includes a land surface of the crown portion and land surfaces of the shoulder land portions; a line of intersection of the land surface of the crown portion and an equator plane is an equator; in a meridian cross-section of the tire, when the tire is fitted on the standardized rim, the internal pressure of the tire is adjusted to 5% of the standardized internal pressure, and no load is applied to the tire, a contour of the land surface of the crown portion is represented by an arc having a center on the equator plane and having a radius of not less than 400 mm and preferably not less than 500 mm, and each of contours of the land surfaces of the shoulder land portions is represented by a straight line or an arc having a curvature of not greater than 0.002 mm⁻¹ and preferably not greater than 0.001 mm⁻¹; and when a point of intersection of an extension line of the arc representing the contour of the land surface of the crown portion and a straight line passing through the end of the tread surface and extending in a radial direction is defined as a reference end of the tread surface, a ratio (D1/D2) of a distance D1 in the radial direction from the equator to the end of the tread surface to a distance D2 in the radial direction from the equator to the reference end of the tread surface is not less than 0.60 and not greater than 1.70 and preferably not less than 0.65 and not greater than 1.65.

By forming the tire as described above, rolling resistance is reduced while a decrease in wet performance due to wear is suppressed, and reduction of the risk of occurrence of uneven wear is achieved.

According to an embodiment of the invention, a groove width of the body portion main body is not greater than 2.5 mm, and a ratio of the groove width of the body portion main body to the maximum groove width of the enlarged width portion is not less than 0.10 and not greater than 0.40.

According to an embodiment of the invention, a ratio of a groove depth from the groove opening of the circumferential narrow groove to a position at which the enlarged width portion has the maximum groove width, to a groove depth of the circumferential narrow groove is not less than 0.80 and not greater than 0.90.

According to an embodiment of the invention, in a ground-contact surface obtained when the tire is fitted on a standardized rim, an internal pressure of the tire is adjusted to a standardized internal pressure, a standardized load is applied to the tire, and the tire is brought into contact with a flat road surface, a length of the ground-contact surface at a position corresponding to 97% of a maximum ground-contact width is a ground-contact length L1, and a length of the ground-contact surface at a position corresponding to 70% of the maximum ground-contact width is a ground-contact length L2, and a ratio (L2/L1) of the ground-contact length L2 to the ground-contact length L1 is not less than 0.90 and not greater than 1.10 and preferably not less than 0.95 and not greater than 1.05.

According to an embodiment of the invention, a length of the ground-contact surface at a position corresponding to a center of the maximum ground-contact width is a ground-contact length L3, and a ratio (L3/L2) of the ground-contact length L3 to the ground-contact length L2 is not less than 1.00 and not greater than 1.20 and preferably not less than 1.05 and not greater than 1.15.

According to an embodiment of the invention, the circumferential narrow groove divides a crown land portion into two crown narrow land portions, each of the two crown narrow land portions has a plurality of crown sipes traversing the crown narrow land portion, and the circumferential narrow groove is deeper than the crown sipes.

According to an embodiment of the invention, the crown sipes are deeper than the body portion of the circumferential narrow groove.

According to an embodiment of the invention, the plurality of circumferential main grooves include a crown circumferential main groove located on the equator plane, and a groove depth of the circumferential narrow groove is equal to a groove depth of the crown circumferential main groove, or the circumferential narrow groove is shallower than the crown circumferential main groove.

According to an embodiment of the invention, in the axial direction, a position of a groove bottom of the shoulder circumferential main groove coincides with a position corresponding to half of a distance WH in the axial direction from the end of the tread surface to the groove bottom of the circumferential narrow groove, or the groove bottom of the shoulder circumferential main groove is located axially inward of the position corresponding to half of the distance WH in the axial direction.

According to an embodiment of the invention, the circumferential narrow groove includes inner narrow grooves closer to the equator plane, outer narrow grooves closer to the end of the tread surface, and connection narrow grooves connecting the inner narrow grooves and the outer narrow grooves, and the inner narrow grooves and the outer narrow grooves are arranged alternately in the circumferential direction.

According to an embodiment of the invention, when, of the two crown narrow land portions, the crown narrow land portion closer to the equator plane is an inner crown narrow land portion, and the crown narrow land portion closer to the end of the tread surface is an outer crown narrow land portion, a direction of inclination of the crown sipes on the inner crown narrow land portion is opposite to a direction of inclination of the crown sipes on the outer crown narrow land portion.

### [Details of Embodiments of Present Invention]

Hereinafter, the present invention will be described in detail based on preferred embodiments with appropriate reference to the drawings.

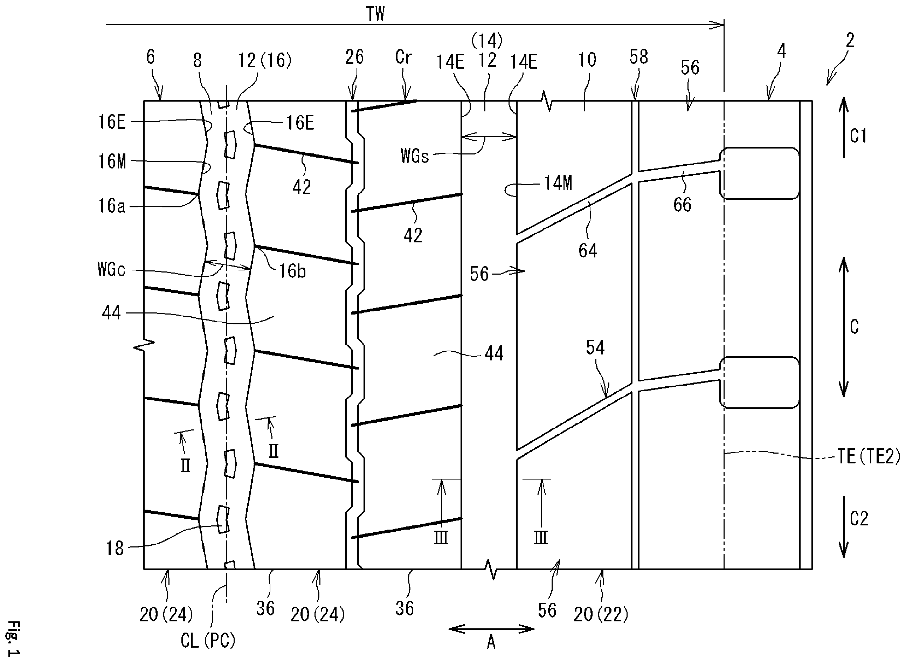

FIG. 1 shows a part of a tire 2 according to one embodiment of the present invention. The tire 2 is mounted to a vehicle such as a truck and a bus. The tire 2 is a heavy duty tire.

A direction indicated by a double-headed arrow A represents the axial direction of the tire 2. A direction indicated by a double-headed arrow C represents the circumferential direction of the tire 2. The direction perpendicular to the surface of the drawing sheet of FIG. 1 is the radial direction of the tire 2.

In FIG. 1, an alternate long and short dash line CL extending in the circumferential direction represents the equator plane of the tire 2.

FIG. 1 shows a tread 4. The tire 2 includes the tread 4. The tread 4 extends in the circumferential direction. The tread 4 is included in a tread portion of the tire 2. The tread 4 is formed from a crosslinked rubber.

Although not shown, the tire 2 includes components such as sidewalls, beads, and a carcass in addition to the tread 4. In the present invention, the internal structure of the tire 2 composed of these components is not particularly limited. Although not described in detail, the tire 2 has a general internal structure as the internal structure of a heavy duty tire.

The tire 2 comes into contact with a road surface at the tread 4. The outer circumferential surface of the tread 4 includes a tread surface 6 which comes into contact with a road surface. In the present invention, the tread surface 6 means the tread surface of an unused tire 2 with no running history, unless otherwise specified.

Grooves 8 are formed on the tread 4. Accordingly, a tread pattern is formed. Of the tread surface 6, a portion other than the grooves 8 is also referred to as land surface 10.

FIG. 1 is a development view of the tread surface 6. In FIG. 1, an alternate long and two short dashes line indicated by reference character TE represents an end of the tread surface 6. In the tread surface 6 shown in FIG. 1, an end TE (not shown) of the tread surface 6 located on the left side of the equator plane CL is also referred to as first end TE1, and an end TE of the tread surface 6 located on the right side of the equator plane CL is also referred to as second end TE2. In FIG. 1, a length indicated by a double-headed arrow TW is the width of the tread surface 6. The width TW of the tread surface 6 is the distance in the axial direction from the first end TE1 to the second end TE2 of the tread surface 6. The width TW of the tread surface 6 is measured along the tread surface 6.

In the present invention, if the ends TE of the tread surface 6 cannot be identified as clear edges in appearance, positions, on the tread surface 6, corresponding to the axially outer ends (also referred to as ground-contact ends) of a ground-contact surface are specified as the ends TE of the tread surface 6. The ground-contact surface is obtained when a load equivalent to a standardized load of the tire 2 is applied to the tire 2 and the tire 2 is brought into contact with a road surface composed of a flat surface in a state where the camber angle of the tire 2 in a standardized state is set to 0°.

A line of intersection of the tread surface 6 (specifically, the land surface of a crown portion described later) and the equator plane CL is also referred to as equator PC. In the case where the groove 8 is located on the equator plane CL as shown in FIG. 1, the equator PC is specified on the basis of a virtual outer surface obtained on the assumption that the groove 8 is not provided on the equator plane CL.

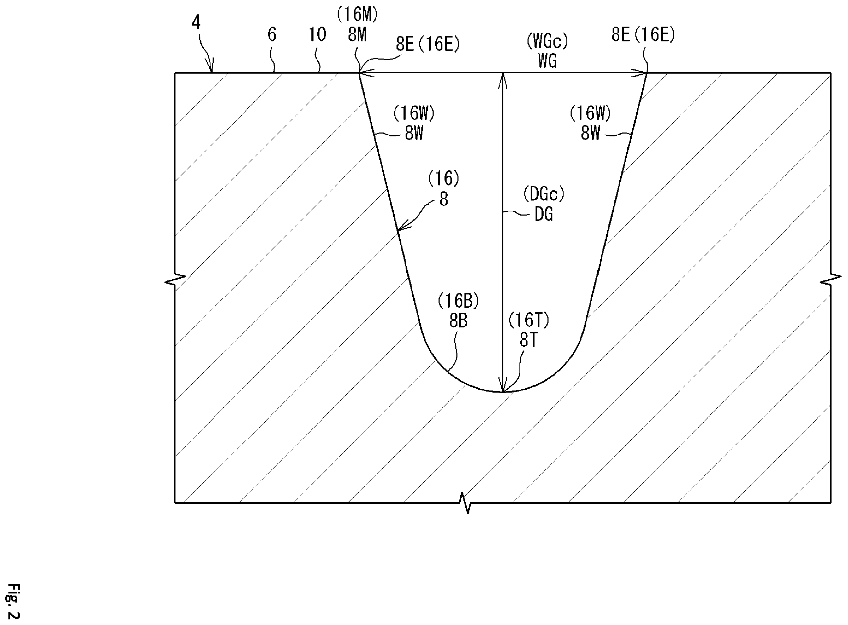

FIG. 2 shows a cross-section of the groove 8 along a line II-II in FIG. 1. The cross-section of the groove 8 shown in FIG. 2 is a cross-section of the groove 8 along a plane perpendicular to a direction in which the groove 8 extends.

FIG. 2 shows an example of the grooves 8 formed on the tread 4. Specifically, the cross-section of the groove 8 shown in FIG. 2 is a cross-section of a crown circumferential main groove described later. The main configuration of the groove 8 will be described with reference to FIG. 2.

The groove 8 has a pair of wall surfaces 8W including a groove opening 8M, and a bottom surface 8B including a groove bottom 8T. The pair of wall surfaces 8W each extend between the groove opening 8M and the bottom surface 8B.

The groove width of the groove 8 is represented as the distance between a first wall surface 8W and a second wall surface 8W which are the pair of wall surfaces 8W, that is, the inter-wall surface distance.

In FIG. 2, a length indicated by a double-headed arrow WG is the groove width of the groove 8 at the groove opening 8M. The groove width WG is represented as the shortest distance from a first edge 8E to a second edge 8E which are a pair of edges 8E forming the groove opening 8M.

In the case where each edge 8E of the groove opening 8M is chamfered and the groove opening 8M of the groove 8 is tapered, unless otherwise specified, the groove width WG at the groove opening 8M is obtained with the point of intersection of an extension line of a contour line of each wall surface 8W and an extension line of a contour line of the land surface 10 being defined as a virtual edge.

A length indicated by a double-headed arrow DG is the groove depth of the groove 8. The groove depth DG of the groove 8 is represented as the shortest distance from a line segment connecting the left and right edges 8E to the groove bottom 8T of the groove 8. A line segment DG representing the groove depth is included in a normal line that is normal to the line segment connecting the left and right edges 8E and passes through the groove bottom 8T. The direction of this normal line is the depth direction of the groove 8.

The position, the groove width WG, the groove depth DG, etc., of the groove 8 are determined as appropriate according to the specifications of the tire 2.

The groove bottom 8T is the deepest position in the cross-section of the groove 8. The distance from the line segment connecting the left and right edges 8E forming the groove opening 8M, to the bottom surface 8B, is measured along a normal line of this line segment. A position at which the distance from the line segment to the bottom surface 8B is the largest is the groove bottom 8T.

The bottom surface 8B shown in FIG. 2 is a curved surface. The bottom surface 8B may include a flat surface, and this flat surface may include the groove bottom 8T. In this case, the width center of the flat surface is used as the groove bottom 8T.

The grooves 8 each having a groove width WG of less than 1.0 mm at the groove opening 8M are also referred to as sipes. The grooves 8 other than sipes are also referred to as ordinary grooves, and each have a groove width WG of not less than 1.0 mm at the groove opening 8M thereof.

A sipe may include a portion (hereinafter referred to as ordinary groove equivalent portion) having a groove width of not less than 1.0 mm, between the groove opening 8M and the groove bottom 8T thereof. In this case, the sipe becomes an ordinary groove when the tread 4 becomes worn and the ordinary groove equivalent portion is exposed.

An ordinary groove may include a portion (hereinafter referred to as sipe equivalent portion) having a groove width of less than 1.0 mm, between the groove opening 8M and the groove bottom 8T thereof. In this case, the ordinary groove becomes a sipe when the tread 4 becomes worn and the sipe equivalent portion is exposed.

Among the ordinary grooves, ordinary grooves extending continuously in the circumferential direction and having a groove depth that is not less than 0.5 times the thickness of the tread 4 are also referred to as circumferential grooves. Ordinary grooves extending continuously in the circumferential direction and having a groove depth that is less than 0.5 times the thickness of the tread 4 are also referred to as longitudinal grooves.

Among the circumferential grooves, circumferential grooves having a pair of wall surfaces 8W that do not come into contact with each other even when the tread 4 comes into contact with a road surface are also referred to as circumferential main grooves. The circumferential main grooves form land portions in the tread 4. The circumferential grooves having a pair of wall surfaces 8W that may come into contact with each other when the tread 4 comes into contact with a road surface are also referred to as circumferential narrow grooves.

The tread pattern of the present invention will be described below based on FIG. 1 showing a tread pattern in a zone from the equator plane CL to the second end TE2 of the tread surface 6. For convenience of description, the position in the circumferential direction of each part of the tread 4 is represented with a side indicated by an arrow C1 as a first side and a side indicated by an arrow C2 as a second side. Although not shown, the tread pattern in a zone from the equator plane CL to the first end TE1 of the tread surface 6 also has the same configuration as that shown in FIG. 1.

As shown in FIG. 1, a plurality of circumferential main grooves 12 are formed on the tread 4 of the tire 2 so as to be aligned in the axial direction. The tread 4 has the plurality of circumferential main grooves 12 aligned in the axial direction and extending continuously in the circumferential direction.

The groove depth of each circumferential main groove 12 is, for example, not less than 10 mm and not greater than 21 mm. From the viewpoint that the tire 2 can exhibit excellent wet performance, the groove depth is preferably not less than 13 mm and not greater than 18 mm.

In the present invention, among the plurality of circumferential main grooves 12 formed on the tread 4, two circumferential main grooves 12 each located on an outermost side in the axial direction are shoulder circumferential main grooves. The circumferential main groove 12 located on the equator plane CL (in the case where there is no circumferential main groove 12 on the equator plane CL, two circumferential main grooves 12 closest to the equator plane CL) is a crown circumferential main groove. In the case where a circumferential main groove 12 is located between the crown circumferential main groove and each shoulder circumferential main groove, this circumferential main groove 12 is also referred to as middle circumferential main groove.

The tread 4 shown in FIG. 1 has three circumferential main grooves 12 aligned in the axial direction. Among the three circumferential main grooves 12, two circumferential main grooves 12 each located on an outermost side in the axial direction are shoulder circumferential main grooves 14. The circumferential main groove 12 located on the equator plane CL is a crown circumferential main groove 16. The tread 4 has the crown circumferential main groove 16 and a pair of the shoulder circumferential main grooves 14.

As described above, the cross-section of the groove 8 shown in FIG. 2 is a cross-section of the crown circumferential main groove 16. The crown circumferential main groove 16 has a pair of wall surfaces 16W including a groove opening 16M, and a bottom surface 16B including a groove bottom 16T.

As shown in FIG. 1, the crown circumferential main groove 16 of the tire 2 extends in a zigzag manner in the circumferential direction. The crown circumferential main groove 16 includes first peaks 16a closer to the first end TE1 (not shown) of the tread surface 6 and second peaks 16b closer to the second end TE2 of the tread surface 6. The crown circumferential main groove 16 extends in a zigzag manner while passing through the first peaks 16a and the second peaks 16b alternately in the circumferential direction. A pair of edges 16E forming the groove opening 16M of the crown circumferential main groove 16 each extend in a zigzag manner in the circumferential direction. The crown circumferential main groove 16 may be formed in the same manner as the shoulder circumferential main grooves 14 described later, such that the pair of edges 16E forming the groove opening 16M thereof each extend straight in the circumferential direction.

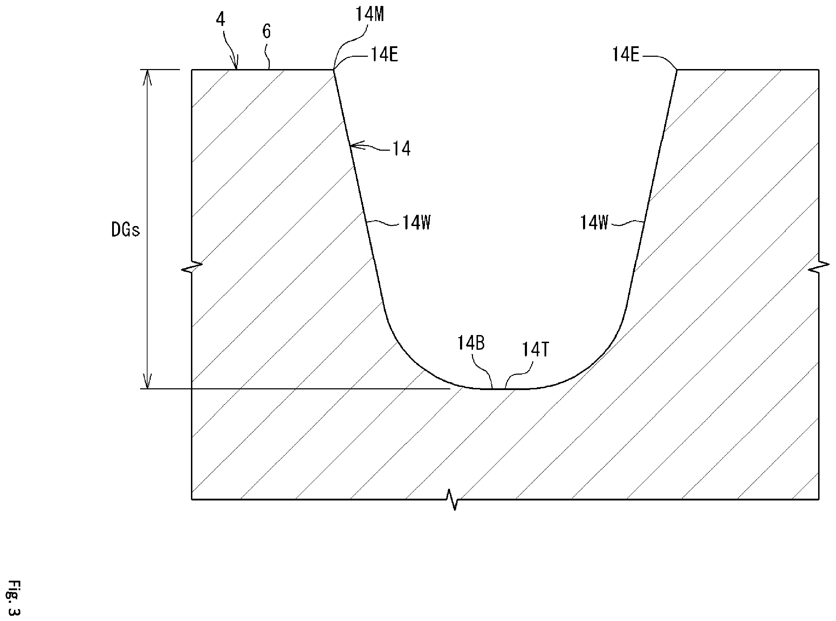

FIG. 3 shows a cross-section of the shoulder circumferential main groove 14 along a line III-III in FIG. 1.

The shoulder circumferential main groove 14 has a pair of wall surfaces 14W including a groove opening 14M, and a bottom surface 14B including a groove bottom 14T. As shown in FIG. 1, a pair of edges 14E forming the groove opening 14M of the shoulder circumferential main groove 14 each extend straight in the circumferential direction. The shoulder circumferential main groove 14 may be formed in the same manner as the crown circumferential main groove 16 described above, such that the pair of edges 14E forming the groove opening 14M thereof each extend in a zigzag manner in the circumferential direction.

In FIG. 1, a length indicated by a double-headed arrow WGc is the groove width at the groove opening 16M of the crown circumferential main groove 16. A length indicated by a double-headed arrow WGs is the groove width at the groove opening 14M of the shoulder circumferential main groove 14.

The ratio (WGc/TW) of the groove width WGc of the crown circumferential main groove 16 to the width TW of the tread surface 6 exceeds 2.0%. Specifically, the ratio (WGc/TW) is preferably not less than 4.0% and not greater than 10%.

In the tread 4 shown in FIG. 1, the groove width WGs of the shoulder circumferential main groove 14 is larger than the groove width WGc of the crown circumferential main groove 16. The ratio (WGs/TW) of the groove width WGs of the shoulder circumferential main groove 14 to the width TW of the tread surface 6 is preferably not less than 5.0% and not greater than 11%.

In FIG. 2, a length indicated by a double-headed arrow DGc is the groove depth of the crown circumferential main groove 16. In FIG. 3, a length indicated by a double-headed arrow DGs is the groove depth of the shoulder circumferential main groove 14. The groove depth DGs of the shoulder circumferential main groove 14 is equal to the groove depth DGc of the crown circumferential main groove 16. The shoulder circumferential main groove 14 may be shallower than the crown circumferential main groove 16, or the shoulder circumferential main groove 14 may be deeper than the crown circumferential main groove 16.

A projection 18 is provided on the bottom surface of the crown circumferential main groove 16 shown in FIG. 1 so as to project from the bottom surface. A plurality of projections 18 are arranged so as to be spaced at predetermined intervals in the circumferential direction. The projections 18 prevent stones from being trapped in the crown circumferential main groove 16.

As described above, the plurality of circumferential main grooves 12 are formed on the tread 4. Accordingly, a plurality of land portions 20 are formed in the tread 4 so as to be aligned in the axial direction. The plurality of circumferential main grooves 12 form the plurality of land portions 20 in the tread 4.

In the present invention, among the plurality of land portions 20 formed in the tread 4, two land portions 20 each located on an outermost side in the axial direction are shoulder land portions. Each shoulder land portion includes the end TE of the tread surface 6. The land portion 20 located on the equator plane CL (in the case where there is no land portion 20 on the equator plane CL, two land portions 20 closest to the equator plane CL) is a crown land portion. In the case where a land portion 20 is located between the crown land portion and each shoulder land portion, this land portion 20 is also referred to as middle land portion.

The tread 4 shown in FIG. 1 has four land portions 20 aligned in the axial direction. Among the four land portions 20, two land portions 20 each located on an outermost side in the axial direction are shoulder land portions 22. In the tread 4, there is no land portion 20 on the equator plane CL. Two land portions 20 closest to the equator plane CL are crown land portions 24. The tread 4 includes a pair of the crown land portions 24 and a pair of the shoulder land portions 22. Each of the pair of the shoulder land portions 22 includes the end TE of the tread surface 6.

In the tire 2, a portion of the tread 4 between a first shoulder circumferential main groove 14 (not shown) and a second shoulder circumferential main groove 14 which are the pair of shoulder circumferential main grooves 14 is a crown portion Cr. A portion of the tread 4 between each shoulder circumferential main groove 14 and the end of the tread surface 6 located close to the shoulder circumferential main groove 14 is a shoulder land portion 22. The two shoulder circumferential main grooves 14 form the crown portion Cr and the two shoulder land portions 22 in the tread 4.

The crown portion Cr shown in FIG. 1 includes the two crown land portions 24 and the crown circumferential main groove 16 located between the two crown land portions 24. The crown portion Cr is composed of one circumferential main groove 12 and two land portions 20.

The crown portion Cr may be composed of only one land portion 20. The crown portion Cr may be composed of two circumferential main grooves 12 and three land portions 20. The crown portion Cr may be composed of three circumferential main grooves 12 and four land portions 20.

The configuration of the crown portion Cr is determined as appropriate in consideration of the specifications of the tire 2. The larger the number of circumferential main grooves 12 included in the crown portion Cr is, the more difficult it becomes to maintain the stiffness of the crown portion Cr at a high stiffness. From the viewpoint of being able to effectively reduce rolling resistance, it is preferable that the number of circumferential main grooves 12 included in the crown portion Cr is smaller. Specifically, the number of circumferential main grooves 12 included in the crown portion Cr is preferably not greater than 2 and more preferably 1 or 0.

At least one circumferential narrow groove 26 is formed on the crown portion Cr of the tire 2. As described above, the crown portion Cr includes the two crown land portions 24. In the tire 2, one circumferential narrow groove 26 is formed on each crown land portion 24. On the crown portion Cr of the tire 2, two circumferential narrow grooves 26 are formed. The crown circumferential main groove 16 is located between the two circumferential narrow grooves 26.

In the tire 2, the number of circumferential narrow grooves 26 formed on one land portion 20 included in the crown portion Cr is not particularly limited. Two or more circumferential narrow grooves 26 may be formed on one land portion 20. The number of circumferential narrow grooves 26 formed on one land portion 20 is determined as appropriate according to the specifications of the tire 2.

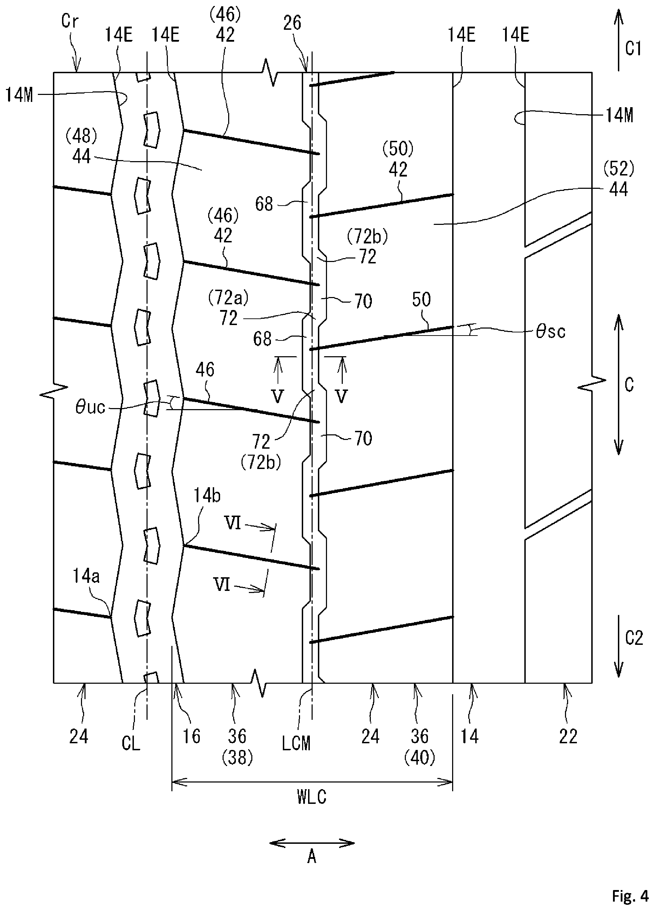

FIG. 4 shows a part of the tread surface 6 shown in FIG. 1. FIG. 4 shows the crown land portion 24.

In FIG. 4, a length indicated by a double-headed arrow WLC is the maximum width of the crown land portion 24. In the crown land portion 24 of the tire 2, the ratio (WLC/TW) of the maximum width WLC to the width TW of the tread surface 6 is not less than 17% and not greater than 27%.

In FIG. 4, an alternate long and short dash line LCM is a maximum width center line of the crown land portion 24. The circumferential narrow groove 26 is located on the maximum width center line LCM. In other words, the circumferential narrow groove 26 is located so as to overlap the maximum width center line LCM in the radial direction. The circumferential narrow groove 26 may be provided axially inward of the maximum width center line LCM, or the circumferential narrow groove 26 may be provided axially outward of the maximum width center line LCM. The position of the circumferential narrow groove 26 is determined as appropriate according to the specifications of the tire 2.

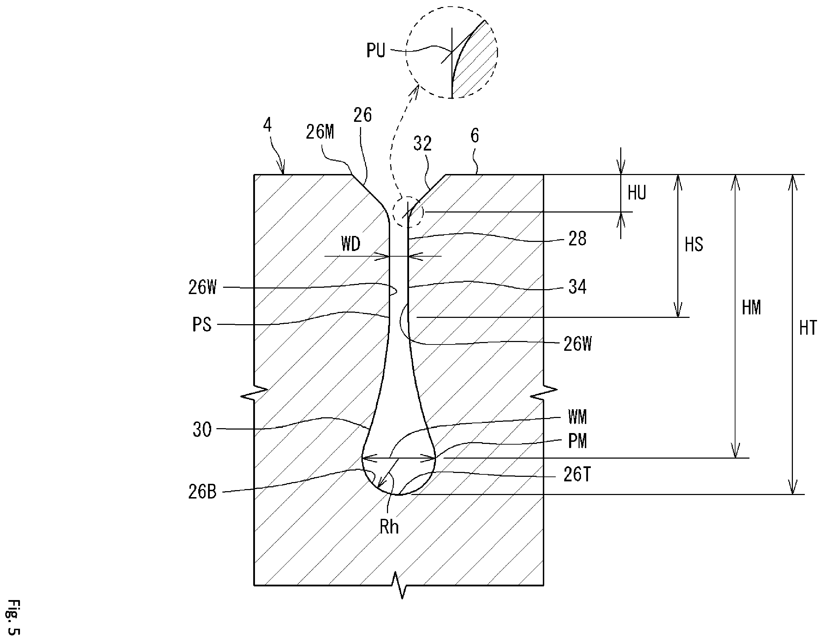

FIG. 5 shows a cross-section of the circumferential narrow groove 26 along a line V-V in FIG. 4.

The circumferential narrow groove 26 has a pair of wall surfaces 26W including a groove opening 26M, and a bottom surface 26B including a groove bottom 26T.

The circumferential narrow groove 26 includes a body portion 28 and an enlarged width portion 30 as shape elements. The body portion 28 of the circumferential narrow groove 26 shown in FIG. 5 includes a tapered portion 32 and a body portion main body 34.

The tapered portion 32 includes the groove opening 26M of the circumferential narrow groove 26. The tapered portion 32 is tapered inward from the groove opening 26M. A contour of each wall surface 26W of the tapered portion 32 shown in FIG. 5 is represented by a straight line. This contour may be represented by one or more arcs.

The body portion main body 34 is located radially inward of the tapered portion 32. The body portion main body 34 is connected to the tapered portion 32. The body portion main body 34 extends straight in the depth direction of the circumferential narrow groove 26. A contour of each wall surface 26W of the body portion main body 34 is represented by a straight line.

In FIG. 5, a position indicated by reference character PU is the boundary between the tapered portion 32 and the body portion main body 34. The boundary PU is represented as the point of intersection of the wall surface contour line of the tapered portion 32 and the wall surface contour line of the body portion main body 34. As shown in FIG. 5, in the case where the boundary portion between the tapered portion 32 and the body portion main body 34 is rounded, the boundary PU is represented as the point of intersection of an extension line of the wall surface contour line of the tapered portion 32 and an extension line of the wall surface contour line of the body portion main body 34.

The tapered portion 32 does not have to be provided in the circumferential narrow groove 26. In this case, the body portion 28 is composed of only the body portion main body 34.

From the viewpoint that the tire 2 can effectively suppress concentration of strain on the groove opening 26M of the circumferential narrow groove 26 while ensuring the groove volume of the circumferential narrow groove 26, it is preferable that the tapered portion 32 is provided in the circumferential narrow groove 26 as shown in FIG. 5.

In FIG. 5, a length indicated by a double-headed arrow WD is the groove width of the body portion main body 34. A portion of the circumferential narrow groove 26 at the groove opening 26M is tapered. The groove width at the groove opening 26M of the circumferential narrow groove 26 is represented as the groove width WD of the body portion main body 34. The groove width WD of the body portion main body 34 is smaller than half the maximum groove width of the enlarged width portion 30 described later.

The enlarged width portion 30 is located radially inward of the body portion 28, specifically, the body portion main body 34. The enlarged width portion 30 is connected to the body portion main body 34. The enlarged width portion 30 includes the groove bottom 26T of the circumferential narrow groove 26.

In FIG. 5, a length indicated by a double-headed arrow WM is the maximum groove width of the enlarged width portion 30. A position indicated by reference character PM is the position at which the enlarged width portion 30 has the maximum groove width WM.

The enlarged width portion 30 includes a portion where the enlarged width portion 30 has the maximum groove width WM, between the body portion main body 34 and the groove bottom 26T. The enlarged width portion 30 has a groove width larger than the groove width WD of the body portion main body 34.

As shown in FIG. 5, the enlarged width portion 30 is tapered outward from a portion where the enlarged width portion 30 has the maximum groove width WM. In the portion from the maximum groove width position PM to the boundary PS, the enlarged width portion 30 is curved so as to be recessed inward from the outer side thereof.

The enlarged width portion 30 is tapered inward from the portion where the enlarged width portion 30 has the maximum groove width WM. In the portion from the maximum groove width position PM to the groove bottom 26T, the enlarged width portion 30 has a rounded contour. In this portion, the enlarged width portion 30 is curved so as to bulge outward from the inner side thereof.

In the enlarged width portion 30, the boundary between the portion curved so as to be recessed inward from the outer side thereof and the portion curved so as to bulge outward from the inner side thereof is located radially outward of the maximum groove width position PM.

In the circumferential narrow groove 26 of the tire 2, a contour of a portion, of the enlarged width portion 30, including the maximum groove width position PM and the groove bottom 26T is represented by an arc. In FIG. 5, an arrow Rh indicates the radius of the arc representing the contour of the portion including the maximum groove width position PM and the groove bottom 26T.

In FIG. 5, a position indicated by reference character PS is the boundary between the body portion main body 34 and the enlarged width portion 30. As described above, in the cross-section of the circumferential narrow groove 26, each wall surface contour line of the body portion main body 34 is a straight line. In the present invention, the position at which a wall surface contour line of the enlarged width portion 30 converges with the wall surface contour line of the body portion main body 34 is the boundary PS between the body portion main body 34 and the enlarged width portion 30. Specifically, the position at which the groove width from the body portion main body 34 to the enlarged width portion 30 is 1.1 times the groove width WD of the body portion main body 34 is represented as the boundary PS between the body portion main body 34 and the enlarged width portion 30.

In FIG. 5, a length indicated by a double-headed arrow HT is the groove depth of the circumferential narrow groove 26. A length indicated by a double-headed arrow HS is the groove depth of the body portion 28. The groove depth HS is represented as the distance from the groove opening 26M to the position PS. A length indicated by a double-headed arrow HU is the groove depth of the tapered portion 32. The groove depth HU is represented as the distance from the groove opening 26M to the position PU. A length indicated by a double-headed arrow HM is the groove depth to the portion where the enlarged width portion 30 has the maximum groove width WM. The groove depth HM is represented as the distance from the groove opening 26M to the maximum groove width position PM.

The groove depth HS, the groove depth HU, and the groove depth HM are measured along a line segment representing the groove depth HT of the circumferential narrow groove 26.

From the viewpoint that the tire 2 can effectively suppress concentration of strain on the groove opening 26M of the circumferential narrow groove 26 while ensuring the groove volume of the circumferential narrow groove 26, the ratio (HU/HT) of the groove depth HU of the tapered portion 32 to the groove depth HT of the circumferential narrow groove 26 is preferably not less than 0.12 and not greater than 0.14.

As described above, the crown land portion 24 has the circumferential narrow groove 26. The circumferential narrow groove 26 divides the crown land portion 24 into two crown narrow land portions 36. Of the two crown narrow land portions 36, the crown narrow land portion 36 closer to the equator plane CL is an inner crown narrow land portion 38, and the crown narrow land portion 36 closer to the end TE of the tread surface 6 is an outer crown narrow land portion 40.

Each of the two crown narrow land portions 36 has a plurality of crown sipes 42 traversing the crown narrow land portion 36. The plurality of crown sipes 42 divide the crown narrow land portion 36 into a plurality of crown blocks 44.

The crown sipes 42 provided on the inner crown narrow land portion 38 are also referred to as inner crown sipes 46. The crown blocks 44 of the inner crown narrow land portion 38 are also referred to as inner crown blocks 48. The crown sipes 42 provided on the outer crown narrow land portion 40 are also referred to as outer crown sipes 50. The crown blocks 44 of the outer crown narrow land portion 40 are also referred to as outer crown blocks 52.

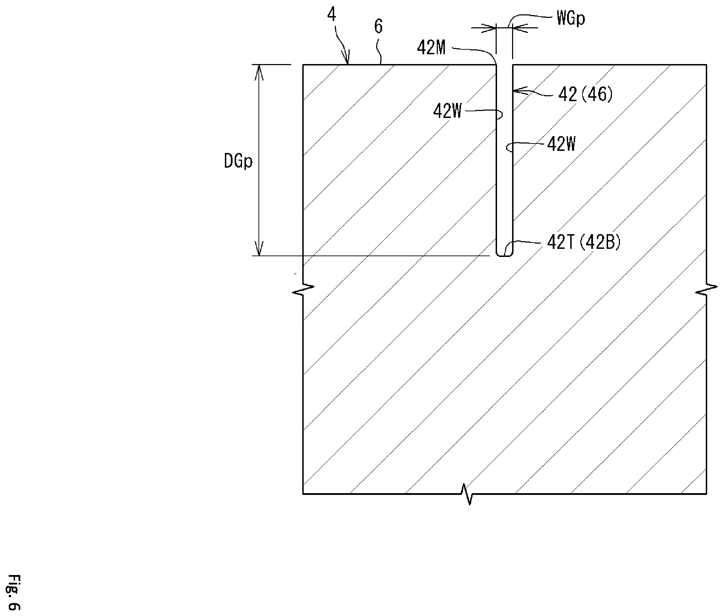

FIG. 6 shows a cross-section of the inner crown sipe 46 along a line VI-VI in FIG. 4.

The cross-sectional shape of each outer crown sipe 50 is the same as that of each inner crown sipe 46. The cross-sectional shape of each crown sipe 42 will be described using the cross-sectional shape of the inner crown sipe 46 as an example.

The crown sipe 42 extends straight in the depth direction thereof. The crown sipe 42 has a pair of wall surfaces 42W including a groove opening 42M, and a bottom surface 42B including a groove bottom 42T.

In FIG. 6, a double-headed arrow WGp indicates the groove width at the groove opening 42M of the crown sipe 42. A double-headed arrow DGp indicates the groove depth of the crown sipe 42.

The groove width WGp of each crown sipe 42 of the tire 2 is less than 1.0 mm. When a load acts on the crown narrow land portion 36 and the crown narrow land portion 36 is deformed, the wall surfaces 42W of the crown sipe 42 come into contact with and support each other.

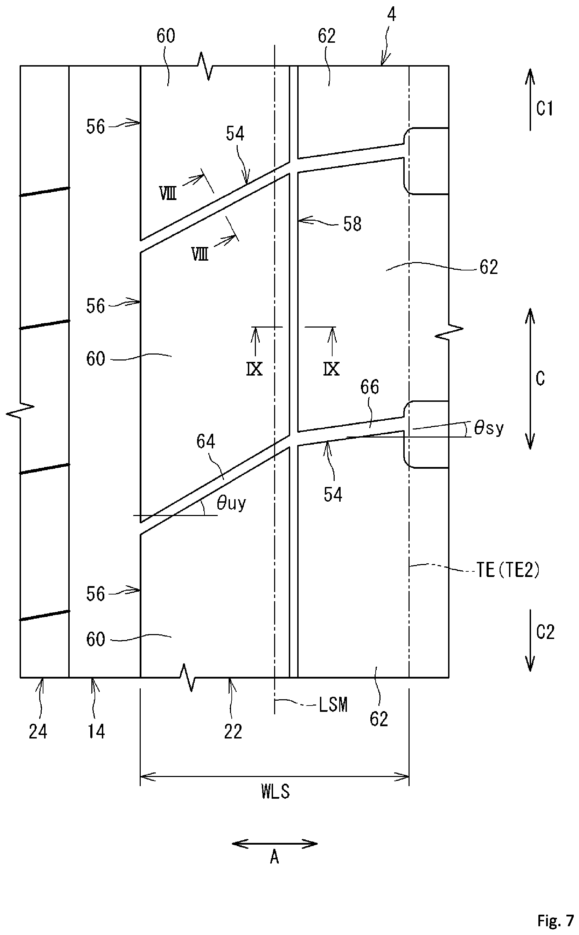

FIG. 7 shows a part of the tread surface 6 shown in FIG. 1. FIG. 7 shows the shoulder land portion 22. In FIG. 7, a length indicated by a double-headed arrow WLS is the maximum width of the shoulder land portion 22. In the shoulder land portion 22 of the tire 2, the ratio (WLS/TW) of the maximum width WLS to the width TW of the tread surface 6 is not less than 15% and not greater than 25%.

In FIG. 7, an alternate long and short dash line LSM is a maximum width center line of the shoulder land portion 22.

In the tread 4 of the tire 2, the two shoulder land portions 22 are provided. Each of the two shoulder land portions 22 has a shoulder lateral groove 54. The shoulder lateral groove 54 connects the shoulder circumferential main groove 14 and the end TE of the tread surface 6. The shoulder lateral groove 54 traverses the shoulder land portion 22. The shoulder lateral groove 54 is inclined with respect to the axial direction. The end on the second end TE2 side of the tread surface 6 of the shoulder lateral groove 54 shown in FIG. 7 is located on the first side in the circumferential direction with respect to the end on the equator plane CL side of the shoulder lateral groove 54. The shoulder lateral groove 54 may be formed so as to extend in the axial direction.

Each shoulder land portion 22 has a plurality of shoulder lateral grooves 54. The plurality of shoulder lateral grooves 54 form a plurality of shoulder blocks 56 in the shoulder land portion 22.

The shoulder lateral grooves 54 function as edge components. The shoulder lateral grooves 54 can contribute to improvement of wet performance. From this viewpoint, it is preferable that the shoulder lateral grooves 54 are inclined with respect to the axial direction.

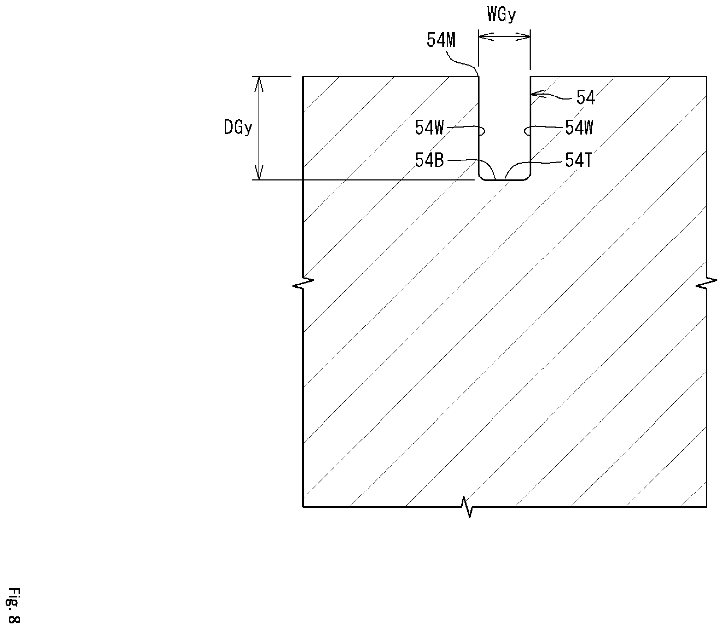

FIG. 8 shows a cross-section of the shoulder lateral groove 54 along a line VIII-VIII in FIG. 7.

The shoulder lateral groove 54 extends straight in the depth direction thereof. The shoulder lateral groove 54 has a pair of wall surfaces 54W including a groove opening 54M, and a bottom surface 54B including a groove bottom 54T.

In FIG. 8, a double-headed arrow WGy indicates the groove width at the groove opening 54M of the shoulder lateral groove 54. A double-headed arrow DGy indicates the groove depth of the shoulder lateral groove 54.

The groove width WGy of the shoulder lateral groove 54 of the tire 2 is not less than 1.0 mm.

The shoulder lateral grooves 54 are shallower than the crown sipes 42 provided on the crown narrow land portion 36. Even though the shoulder lateral grooves 54 are provided on the shoulder land portion 22, the stiffness of the shoulder land portion 22 is appropriately maintained. From this viewpoint, it is preferable that the shoulder lateral grooves 54 are shallower than the crown sipes 42. Specifically, the ratio (DGy/DGp) of the groove depth DGy of each shoulder lateral groove 54 to the groove depth DGp of each crown sipe 42 is preferably not greater than 0.50 and more preferably not greater than 0.30. From the viewpoint that the shoulder lateral groove 54 can effectively contribute to improvement of wet performance, the ratio (DGy/DGp) is preferably not less than 0.10.

As shown in FIG. 7, the shoulder land portion 22 has a shoulder longitudinal groove 58 extending continuously in the circumferential direction.

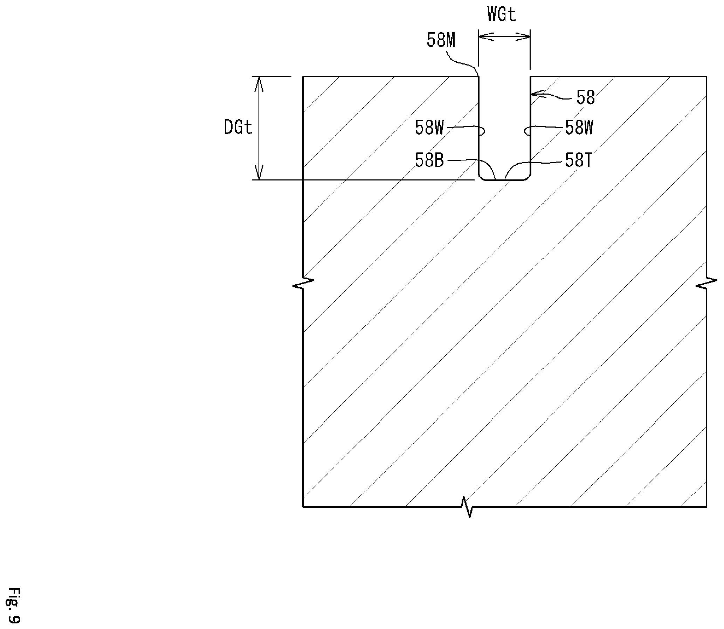

FIG. 9 shows a cross-section of the shoulder longitudinal groove 58 along a line IX-IX in FIG. 7.

The shoulder longitudinal groove 58 extends straight in the depth direction thereof. The shoulder longitudinal groove 58 has a pair of wall surfaces 58W including a groove opening 58M, and a bottom surface 58B including a groove bottom 58T.

In FIG. 9, a double-headed arrow WGt indicates the groove width at the groove opening 58M of the shoulder longitudinal groove 58. A double-headed arrow DGt indicates the groove depth of the shoulder longitudinal groove 58.

The groove width WGt of the shoulder longitudinal groove 58 of the tire 2 is not less than 1.0 mm.

The shoulder longitudinal groove 58 of the tire 2 is shallower than the crown sipes 42 provided on the crown narrow land portion 36. Even though the shoulder longitudinal groove 58 is provided on the shoulder land portion 22 in addition to the shoulder lateral grooves 54, the stiffness of the shoulder land portion 22 is appropriately maintained. From this viewpoint, it is preferable that the shoulder longitudinal groove 58 is shallower than the crown sipes 42. Specifically, the ratio (DGt/DGp) of the groove depth DGt of the shoulder longitudinal groove 58 to the groove depth DGp of each crown sipe 42 is preferably not greater than 0.50 and more preferably not greater than 0.30. From the viewpoint that the shoulder longitudinal groove 58 can effectively contribute to improvement of wet performance, the ratio (DGt/DGp) is preferably not less than 0.10.

As shown in FIG. 7, the shoulder longitudinal groove 58 traverses the shoulder blocks 56. Accordingly, an inner shoulder block 60 and an outer shoulder block 62 are formed in each shoulder block 56.

The shoulder longitudinal groove 58 intersects the shoulder lateral grooves 54. Accordingly, an inner shoulder lateral groove 64 and an outer shoulder lateral groove 66 are formed in each shoulder lateral groove 54. Each shoulder lateral groove 54 includes the inner shoulder lateral groove 64 and the outer shoulder lateral groove 66. The inner shoulder lateral groove 64 connects the shoulder circumferential main groove 14 and the shoulder longitudinal groove 58. The outer shoulder lateral groove 66 connects the shoulder longitudinal groove 58 and the end TE of the tread surface 6.

Since the shoulder longitudinal groove 58 intersects the shoulder lateral grooves 54, water existing between a wet road surface and the tire 2 is effectively drained through the shoulder lateral grooves 54. The tire 2 can have improved wet performance. From this viewpoint, it is preferable that the shoulder longitudinal groove 58 intersects the shoulder lateral grooves 54.

As described above, at least one circumferential narrow groove 26 is formed on the crown portion Cr of the tread 4. When the tread 4 comes into contact with a road surface, each crown land portion 24 included in the crown portion Cr is deformed. In the tire 2, the pair of wall surfaces 26W of the circumferential narrow groove 26 come into contact with each other at the body portion 28 (specifically, the body portion main body 34).

In the tire 2, when the tread 4 comes into contact with a road surface, the crown narrow land portions 36 can come into contact with and support each other. The circumferential narrow groove 26 increases the apparent stiffness of the crown land portion 24. The crown portion Cr includes the two crown land portions 24. Since deformation of the crown portion Cr is suppressed, the tire 2 can have reduced rolling resistance and can have improved wear resistance.

As described above, the circumferential narrow groove 26 has the enlarged width portion 30 on the inner side of the body portion 28. When the body portion 28 disappears due to wear, the enlarged width portion 30 is exposed. As described above, the enlarged width portion 30 has a groove width larger than the groove width WD of the body portion main body 34. The enlarged width portion 30 of the circumferential narrow groove 26 can contribute to an increase in groove volume. The circumferential narrow groove 26 having the enlarged width portion 30 can more effectively drain water existing between a road surface and the tread surface 6, than a circumferential narrow groove not having the enlarged width portion 30. Although the apparent stiffness of the land portion 20 is increased due to wear, the enlarged width portion 30 suppresses a rapid increase in stiffness, so that the tire 2 can maintain good wet performance and low rolling resistance even when the tread 4 becomes worn.

The tire 2 can have reduced rolling resistance while suppressing a decrease in wet performance due to wear.

As described above, the circumferential narrow groove 26 increases the apparent stiffness of the crown land portion 24. Since deformation of the crown land portion 24 is suppressed, there is a concern that the shape of a ground-contact surface may change. Specifically, since the ground-contact length of the crown portion Cr is shortened, the ground-contact length of the shoulder portion becomes relatively long, which may result in an increased risk of occurrence of uneven wear.

As a result of conducting a thorough study for the risk of occurrence of uneven wear by focusing on the contour of the tread surface 6, the present inventor has found that the risk of occurrence of uneven wear can be reduced by adjusting the distance in the radial direction from the equator PC to the end TE of the tread surface 6 to control the ground-contact length of the shoulder portion, and thus has completed the present invention. Hereinafter, the technology for reducing the risk of occurrence of uneven wear will be described.

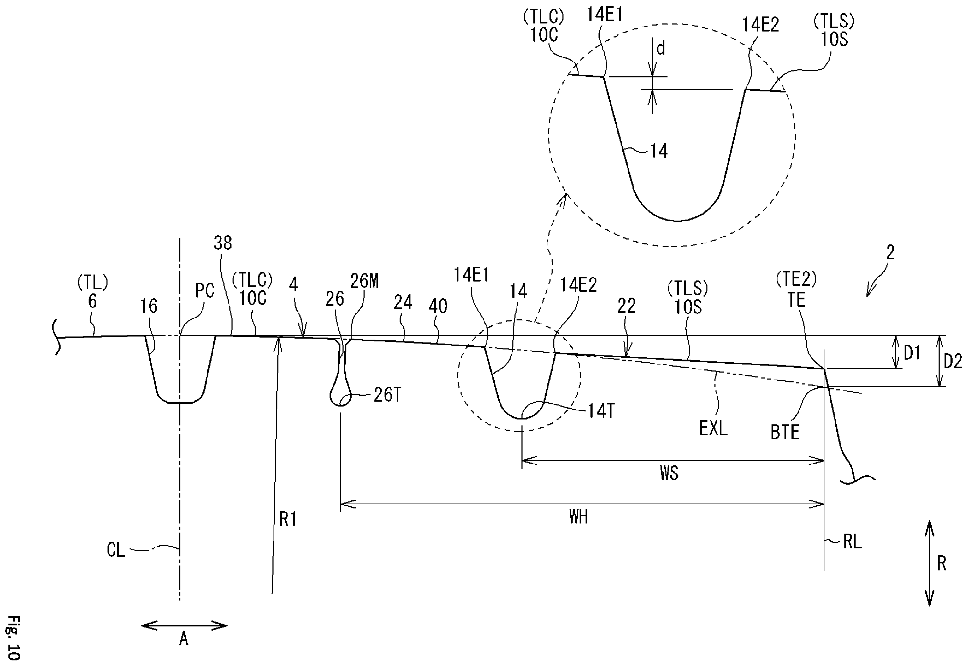

FIG. 10 shows a part of a contour line of the tire 2 in the meridian cross-section of the tire 2 shown in FIG. 1. FIG. 10 shows a part of a contour line TL of the tread surface 6. In the present invention, the meridian cross-section means a cross-section of the tire 2 along a plane including the rotation axis of the tire 2.

In FIG. 10, a direction indicated by a double-headed arrow A represents the axial direction of the tire 2. A direction indicated by a double-headed arrow R represents the radial direction of the tire 2. The direction perpendicular to the surface of the drawing sheet of FIG. 1 is the circumferential direction of the tire 2.

The contour line TL shown in FIG. 10 is obtained by measuring the outer surface shape of the tire 2 in the reference state by a displacement sensor.

The contour line of the outer surface of the tire 2 is formed by connecting a plurality of contour lines each composed of a straight line or an arc, on the assumption that the grooves 8, decorations, etc., are not present in the measured outer surface shape.

Although not described in detail, the outer surface of the tire 2 is shaped by pressing an unvulcanized tire (green tire 2, and also referred to as raw cover) against the cavity surface of a mold which is not shown. The contour line TL of the tread surface 6 shown in FIG. 10 coincides with a contour line of a portion, of the cavity surface of the mold, corresponding to the tread surface 6.

As described above, the portion of the tread 4 between the first shoulder circumferential main groove 14 (not shown) and the second shoulder circumferential main groove 14 which are the pair of shoulder circumferential main grooves 14 is the crown portion Cr, and the portion of the tread 4 between each shoulder circumferential main groove 14 and the end TE of the tread surface 6 located close to the shoulder circumferential main groove 14 is the shoulder land portion 22.

The tread surface 6 of the tire 2 includes a land surface 10C of the crown portion Cr and land surfaces 10S of the pair of the shoulder land portions 22. The contour line TL of the tread surface 6 includes a contour line (hereinafter referred to as crown contour line TLC) of the land surface 10C of the crown portion Cr and contour lines (hereinafter referred to as shoulder contour lines TLS) of the land surfaces 10S of the pair of the shoulder land portions 22.

The crown contour line TLC of the tire 2 extends between an inner edge 14E1 (not shown) of the shoulder circumferential main groove 14 located on the first end TE1 side of the tread surface 6 and an inner edge 14E1 of the shoulder circumferential main groove 14 located on the second end TE2 side of the tread surface 6, and includes the equator PC. The crown contour line TLC also includes the groove opening 26M of the circumferential narrow groove 26.

In the crown contour line TLC, the equator PC is located on the outermost side in the radial direction, and the inner edge 14E1 of the shoulder circumferential main groove 14 is located on the innermost side in the radial direction. The crown contour line TLC is formed such that the distance from the rotation axis (not shown) of the tire 2 gradually decreases from the equator PC toward the inner edge 14E1.

The crown contour line TLC is an outwardly bulging arc. In FIG. 10, an arrow indicated by reference character R1 indicates the radius of the crown contour line TLC. Although not shown, the center of the crown contour line TLC is located on the equator plane CL. The contour of the land surface 10C of the crown portion Cr is represented by an arc having a center on the equator plane CL.

Each shoulder contour line TLS of the tire 2 extends between an outer edge 14E2 of the shoulder circumferential main groove 14 and the end TE of the tread surface 6.

In the shoulder contour line TLS, the outer edge 14E2 of the shoulder circumferential main groove 14 is located on the outermost side in the radial direction, and the end TE of the tread surface 6 is located on the innermost side in the radial direction. The shoulder contour line TLS is formed such that the distance from the above-described rotation axis (not shown) gradually decreases from the outer edge 14E2 toward the end TE of the tread surface 6.

The shoulder contour line TLS of the tire 2 is a straight line. The shoulder contour line TLS may be an arc. In other words, the contour of the land surface 10S of the shoulder land portion 22 is represented by a straight line or an arc. In the case where the shoulder contour line TLS is an arc, this arc may be an outwardly bulging arc having a center inside the tread surface 6, or may be an inwardly bulging arc having a center outside the tread surface 6.

In the contour line TL of the tread surface 6 of the tire 2, the transition between the crown contour line TLC and the shoulder contour line TLS is located between the pair of wall surfaces 14W of the shoulder circumferential main groove 14. As shown in FIG. 10, the outer edge 14E2 of the shoulder circumferential main groove 14 is located radially inward of the inner edge 14E1 thereof. If the distance in the radial direction from the inner edge 14E1 to the outer edge 14E2 which is indicated by a double-headed arrow d in FIG. 10 is not greater than 2.0 mm, an extension line of the crown contour line TLC and an extension line of the shoulder contour line TLS may be tangent to each other, may intersect each other, or may be separated without intersecting each other.

In FIG. 10, a solid line RL is a radial reference line. The radial reference line RL is a straight line passing through the end TE of the tread surface 6 and extending in the radial direction. A solid line EXL is the extension line of the crown contour line TLC, that is, an extension line of the arc representing the contour of the land surface 10C of the crown portion Cr. A position indicated by reference character BTE is the point of intersection of the radial reference line RL and the extension line EXL. The point of intersection BTE is a reference end of the tread surface 6.

In FIG. 10, a length indicated by a double-headed arrow D1 is the distance in the radial direction from the equator PC to the end TE of the tread surface 6. The distance D1 in the radial direction is also referred to as drop amount of the tread surface 6. A length indicated by a double-headed arrow D2 is the distance in the radial direction from the equator PC to the reference end BTE of the tread surface 6. The distance D2 in the radial direction is also referred to as reference drop amount of the tread surface 6.

The ratio (D1/D2) of the drop amount D1 to the reference drop amount D2 represents the position of the tread surface 6 relative to the extension line EXL and how far the tread surface 6 is from the extension line EXL. Specifically, the closer the ratio (D1/D2) is to 1.00, the closer the tread surface 6 is to the extension line EXL. When the ratio (D1/D2) is greater than 1.00, it represents that the tread surface 6 is located radially inward of the extension line EXL. A state where the tread surface 6 is located radially inward of the extension line EXL is represented as the tread surface 6 being located on the negative side. When the ratio (D1/D2) is less than 1.00, it represents that the tread surface 6 is located radially outward of the extension line EXL. A state where the tread surface 6 is located radially outward of the extension line EXL is represented as the tread surface 6 being located on the positive side.

In the tread 4 shown in FIG. 6, the drop amount D1 of the tread surface 6 is smaller than the reference drop amount D2, in other words, the ratio (D1/D2) is less than 1.00. Therefore, the tread surface 6 is located on the positive side.

In the tire 2, the contour line TL of the tread surface 6 in the meridian cross-section of the tire 2 includes the crown contour line TLC and a pair of the shoulder contour lines TLS. The crown contour line TLC is an arc having a center on the equator plane CL and having a radius of not less than 400 mm, and each shoulder contour line TLS is a straight line or an arc having a curvature of not greater than 0.002 mm⁻¹.

If the radius R1 of the arc of the crown contour line TLC is less than 400 mm, the roundness of the land surface 10C of the crown portion Cr is emphasized, and the land surface 10C of the crown portion Cr is pressed against a road surface such that the groove width of the circumferential narrow groove 26 increases rather than the circumferential narrow groove 26 being flattened. In this case, the circumferential narrow groove 26 cannot sufficiently exhibit its effect. However, since the crown contour line TLC of the tire 2 is an arc having a center on the equator plane CL and having a radius of not less than 400 mm, the land surface 10C of the crown portion Cr is pressed against a road surface such that the circumferential narrow groove 26 is flattened. The circumferential narrow groove 26 of the tire 2 can sufficiently exhibit its effect. From this viewpoint, the crown contour line TLC is preferably an arc having a center on the equator plane CL and having a radius of not less than 500 mm.

In the case where the shoulder contour line TLS is represented by an arc having a curvature of greater than 0.002 mm⁻¹, if this arc is an outwardly bulging arc, the land surface 10S of the shoulder land portion 22 bulges, and the volume of the shoulder land portion 22 increases. In this case, rolling resistance may increase. On the other hand, if this arc is an inwardly bulging arc, the land surface 10S of the shoulder land portion 22 is recessed, and the entire land surface 10S cannot come into contact with a road surface, so that the ground-contact pressure may be locally increased at the end TE of the tread surface 6, for example. In this case, the risk of occurrence of uneven wear increases. However, since the shoulder contour line TLS of the tire 2 is a straight line or an arc having a curvature of not greater than 0.002 mm⁻¹, the volume of the shoulder land portion 22 is appropriately maintained. Since the entire land surface 10S comes into contact with a road surface, a local increase in ground-contact pressure is also suppressed. An increase in rolling resistance and occurrence of uneven wear caused by the shoulder land portion 22 are suppressed. From this viewpoint, the shoulder contour line TLS is preferably a straight line or an arc having a curvature of not greater than 0.001 mm⁻¹.

The ratio (D1/D2) of the drop amount D1 to the reference drop amount D2 is not less than 0.60 and not greater than 1.70.

If the ratio (D1/D2) is less than 0.60, the ground-contact length at the shoulder portion may become longer, and the ground-contact pressure may increase locally at the end TE of the tread surface 6. In this case, the risk of occurrence of uneven wear increases. If the ratio (D1/D2) is greater than 1.70, the ground-contact length at the shoulder portion may become excessively short, and a portion at the end TE of the tread surface 6 may be likely to slip against a road surface. In this case as well, the risk of occurrence of uneven wear increases. However, in the tire 2, since the ratio (D1/D2) is not less than 0.60 and not greater than 1.70, the tire 2 can control the ground-contact state of the shoulder portion so as to exhibit a ground-contact length that is commensurate with the ground-contact length of the crown portion Cr which is shortened by providing the circumferential narrow groove 26. Furthermore, since the enlarged width portion 30 provided on the groove bottom 26T side of the circumferential narrow groove 26 suppresses an excessive increase in the stiffness of the crown portion Cr, the tire 2 can effectively control the ground-contact state of the shoulder portion. The tire 2 can reduce the risk of occurrence of uneven wear. From this viewpoint, the ratio (D1/D2) is preferably not less than 0.65 and not greater than 1.65.

As described above, the tire 2 can have reduced rolling resistance while suppressing a decrease in wet performance due to wear. The tire 2 can have reduced rolling resistance while suppressing a decrease in wet performance due to wear and can achieve reduction of the risk of occurrence of uneven wear.

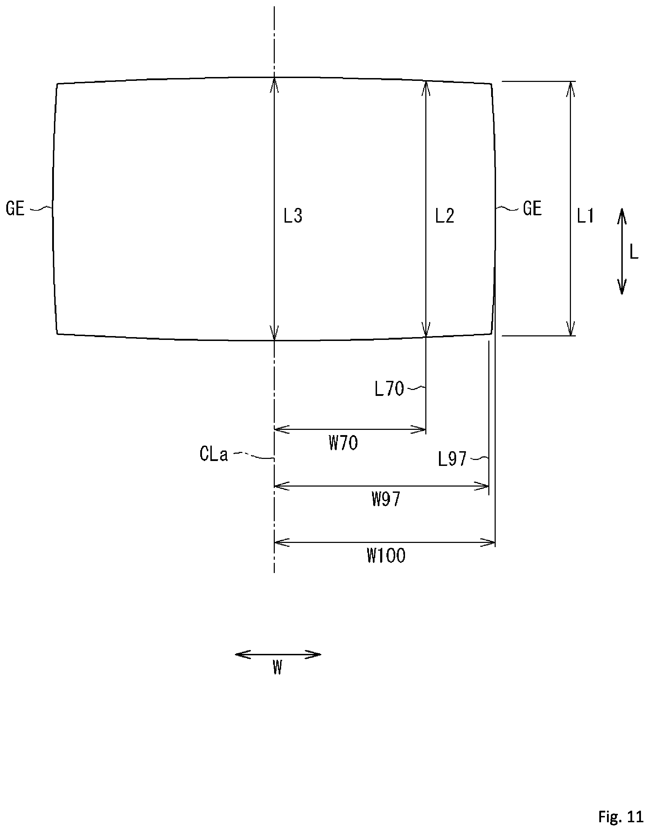

FIG. 11 shows an example of the shape of a ground-contact surface (ground-contact shape) of the tire 2. In FIG. 11, a direction indicated by a double-headed arrow L is the length direction of the ground-contact surface. The length direction corresponds to the circumferential direction of the tire 2. A direction indicated by a double-headed arrow W is the width direction of the ground-contact surface. The width direction corresponds to the axial direction of the tire 2.

As described above, the ground-contact shape is obtained, using a ground-contact shape measuring device (not shown), for example, by taking, with a camera, an image of a ground-contact surface obtained when the standardized load is applied to the tire 2 in the standardized state and the tire 2 is brought into contact with a flat road surface with a camber angle being set to 0 degrees, or transferring the ground-contact surface.

Using the schematic diagram of the ground-contact shape shown in FIG. 11, an index for evaluating the ground-contact shape will be described below.

In FIG. 11, an alternate long and short dash line CLa is a reference line indicating the center position in the width direction of the ground-contact shape. The reference line CLa normally coincides with the equator plane CL of the tire 2.

Each position indicated by reference character GE is an outer end in the width direction of the ground-contact surface. The distance in the width direction from a first outer end GE in the width direction to a second outer end GE in the width direction is the maximum ground-contact width of the ground-contact surface.

A length indicated by a double-headed arrow W100 is the distance in the width direction from the reference line CLa to the outer end GE in the width direction. The distance W100 in the width direction is also referred to as reference width. The above-described maximum ground-contact width is equal to twice the reference width W100.

A solid line indicated by reference character L70 is a straight line located between the reference line CLa and the outer end GE in the width direction and extending in the length direction. A length indicated by a double-headed arrow W70 is the distance in the width direction from the reference line CLa to the solid line L70. In the present invention, the ratio (W70/W100) of the distance W70 in the width direction to the reference width W100 is 70%. The solid line L70 represents a position corresponding to 70% of the maximum ground-contact width.

A solid line indicated by reference character L97 is a straight line located between the solid line L70 and the outer end GE in the width direction and extending in the length direction. A length indicated by a double-headed arrow W97 is the distance in the width direction from the reference line CLa to the solid line L97. In the present invention, the ratio (W97/W100) of the distance W97 in the width direction to the reference width W100 is 97%. The solid line L97 represents a position corresponding to 97% of the maximum ground-contact width.

A length indicated by a double-headed arrow L1 is the length of a line of intersection of the solid line L97 and the ground-contact shape. In the present invention, the length L1 is the length of the ground-contact surface at the position corresponding to 97% of the maximum ground-contact width, and is represented as ground-contact length L1.

A length indicated by a double-headed arrow L2 is the length of a line of intersection of the solid line L70 and the ground-contact shape. In the present invention, the length L2 is the length of the ground-contact surface at the position corresponding to 70% of the maximum ground-contact width, and is represented as ground-contact length L2.

A length indicated by a double-headed arrow L3 is the length of a line of intersection of the reference line CLa and the ground-contact shape. In the present invention, the length L3 is the length of the ground-contact surface at a position corresponding to the center of the maximum ground-contact width, and is represented as ground-contact length L3.

In the tire 2, the ratio (L2/L1) of the ground-contact length L2 to the ground-contact length L1 is preferably not less than 0.90 and not greater than 1.10.

When the ratio (L2/L1) is not less than 0.90, the ground-contact length of an inner portion of the shoulder portion is inhibited from becoming shorter relative to the ground-contact length of an outer portion of the shoulder portion, that is, the portion at the end TE of the tread surface 6. Since a local increase in ground-contact pressure is suppressed, the tire 2 can reduce the risk of occurrence of uneven wear. From this viewpoint, the ratio (L2/L1) is more preferably not less than 0.95.

When the ratio (L2/L1) is not greater than 1.10, the ground-contact length of the inner portion of the shoulder portion is inhibited from becoming longer relative to the ground-contact length of the portion at the end TE of the tread surface 6. Since the shoulder land portion 22 is less likely to slip against a road surface, the risk of occurrence of uneven wear can also be reduced in this case. From this viewpoint, the ratio (L2/L1) is more preferably not greater than 1.05.

In the tire 2, the ratio (L3/L2) of the ground-contact length L3 to the ground-contact length L2 is preferably not less than 1.00 and not greater than 1.20.

When the ratio (L3/L2) is not less than 1.00, the ground-contact length of the crown portion Cr is inhibited from becoming shorter relative to the ground-contact length of the portion at the end TE of the tread surface 6. Since the crown portion Cr is less likely to slip against a road surface, the tire 2 can reduce the risk of occurrence of uneven wear. From this viewpoint, the ratio (L3/L2) is more preferably not less than 1.05.

When the ratio (L3/L2) is not greater than 1.20, the ground-contact length of the crown portion Cr is inhibited from becoming longer relative to the ground-contact length of the portion at the end TE of the tread surface 6. Since a local increase in ground-contact pressure is suppressed, the tire 2 can also reduce the risk of occurrence of uneven wear in this case. From this viewpoint, the ratio (L3/L2) is more preferably not greater than 1.15.

In the tire 2, from the viewpoint of reducing the risk of occurrence of uneven wear, it is more preferable that the ratio (L2/L1) is not less than 0.90 and not greater than 1.10 and the ratio (L3/L2) is not less than 1.00 and not greater than 1.20.

As described above, when each crown land portion 24 included in the crown portion Cr is deformed, the pair of wall surfaces 26W of the circumferential narrow groove 26 come into contact with each other at the body portion main body 34. Accordingly, deformation of the crown portion Cr is suppressed, and rolling resistance is reduced.

In the tire 2, the groove width WD of the body portion main body 34 is preferably not greater than 2.5 mm. Accordingly, the body portion main body 34 of the circumferential narrow groove 26 can effectively contribute to reduction of rolling resistance. From this viewpoint, the groove width WD is more preferably not greater than 2.0 mm.

As described above, the circumferential narrow groove 26 has the enlarged width portion 30 having a groove width larger than the groove width of the body portion main body 34, on the inner side of the body portion main body 34.

In the tire 2, the ratio (WD/WM) of the groove width WD of the body portion main body 34 to the maximum groove width WM of the enlarged width portion 30 is preferably not less than 0.10 and not greater than 0.40.

When the ratio (WD/WM) is set to be not less than 0.10, the enlarged width portion 30 does not become excessively large, and the size of the enlarged width portion 30 is appropriately maintained. Since the influence of the enlarged width portion 30 on stiffness is suppressed, the circumferential narrow groove 26 can effectively contribute to reduction of rolling resistance. From this viewpoint, the ratio (WD/WM) is more preferably not less than 0.15.

When the ratio (WD/WM) is set to be not greater than 0.40, the enlarged width portion 30 does not become excessively small, and the size of the enlarged width portion 30 is appropriately maintained. When the enlarged width portion 30 is exposed, the enlarged width portion 30 can effectively contribute to improvement of wet performance. From this viewpoint, the ratio (WD/WM) is more preferably not greater than 0.35.

From the viewpoint that the tire 2 can have reduced rolling resistance while suppressing a decrease in wet performance due to wear, it is more preferable that the groove width WD of the body portion main body 34 is not greater than 2.0 mm and the ratio (WD/WM) of the groove width WD of the body portion main body 34 to the maximum groove width WM of the enlarged width portion 30 is not less than 0.10 and not greater than 0.40.

In the tire 2, preferably, the position PM at which the enlarged width portion 30 has the maximum groove width WM is located between the groove bottom 26T and a position corresponding to a groove depth that is 3/4 of the groove depth of the circumferential narrow groove 26. Specifically, the ratio (HM/HT) of the groove depth HM from the groove opening 26M of the circumferential narrow groove 26 to the position PM at which the enlarged width portion 30 has the maximum groove width WM, to the groove depth HT of the circumferential narrow groove 26, is preferably not less than 0.80 and not greater than 0.90.

When the ratio (HM/HT) is set to be not less than 0.80, the enlarged width portion 30 is placed at an appropriate interval from the groove opening 26M. Since the length of the body portion main body 34 is ensured, the circumferential narrow groove 26 can effectively contribute to reduction of rolling resistance. From this viewpoint, the ratio (HM/HT) is more preferably not less than 0.82.

When the ratio (HM/HT) is set to be not greater than 0.90, the exposed enlarged width portion 30 can effectively contribute to improvement of wet performance. From this viewpoint, the ratio (HM/HT) is more preferably not greater than 0.88.

The groove depth HT of the circumferential narrow groove 26 of the tire 2 is equal to the groove depth DGc of the crown circumferential main groove 16, or the circumferential narrow groove 26 is shallower than the crown circumferential main groove 16. As described above, the circumferential narrow groove 26 has the enlarged width portion 30 on the groove bottom 26T side thereof. The enlarged width portion 30 of the circumferential narrow groove 26 can effectively contribute to compensating for a reduced groove volume until a state (hereinafter referred to as end-wear state) where the tread 4 has worn and replacement of the tire 2 is required is reached. The tire 2 can effectively suppress a decrease in wet performance due to wear.

From this viewpoint, it is preferable that the groove depth HT of the circumferential narrow groove 26 is equal to the groove depth DGc of the crown circumferential main groove 16, or the circumferential narrow groove 26 is shallower than the crown circumferential main groove 16. In other words, it is preferable that the ratio (HT/DGc) of the groove depth HT of the circumferential narrow groove 26 to the groove depth DGc of the crown circumferential main groove 16 is not greater than 1.0.

From the viewpoint that the enlarged width portion 30 can effectively contribute to compensating for the reduced groove volume without the entire circumferential narrow groove 26 disappearing in the end-wear state, the ratio (HT/DGc) is preferably not less than 0.75.

The ratio (HS/HT) of the groove depth HS of the body portion 28 of the circumferential narrow groove 26 to the groove depth HT of the circumferential narrow groove 26 is preferably not less than 0.20 and not greater than 0.50.

When the ratio (HS/HT) is set to be not less than 0.20, the tire 2 can effectively suppress the influence of the enlarged width portion 30 on the stiffness of the crown land portion 24. The circumferential narrow groove 26 can effectively contribute to increasing the apparent stiffness of the crown land portion 24. The tire 2 can have further reduced rolling resistance. From this viewpoint, the ratio (HS/HT) is more preferably not less than 0.25.

When the ratio (HS/HT) is set to be not greater than 0.50, the enlarged width portion 30 can effectively contribute to compensating for the groove volume reduced due to wear. From this viewpoint, the ratio (HS/HT) is more preferably not greater than 0.45.

The circumferential narrow groove 26 of the tire 2 is deeper than the crown sipes 42. The crown sipes 42 disappear before the circumferential narrow groove 26. From the viewpoint of being able to suppress the influence of the crown sipes 42 becoming the enlarged width portion 30 of the circumferential narrow groove 26 on rolling resistance and on wet performance to be smaller, the ratio (DGp/HT) of the groove depth DGp of each crown sipe 42 to the groove depth HT of the circumferential narrow groove 26 is preferably not less than 0.30 and more preferably not less than 0.50. From the same viewpoint, the ratio (DGp/HT) is preferably not greater than 0.85.

In the tire 2, it is preferable that the crown sipes 42 are deeper than the body portion 28 of the circumferential narrow groove 26. Accordingly, the tire 2 can suppress the influence of the crown sipes 42 becoming the enlarged width portion 30 of the circumferential narrow groove 26 on rolling resistance and on wet performance to be smaller. From this viewpoint, it is more preferable that the ratio (HS/HT) of the groove depth HS of the body portion 28 of the circumferential narrow groove 26 to the groove depth HT of the circumferential narrow groove 26 is not less than 0.20 and not greater than 0.50, the ratio (DGp/HT) of the groove depth DGp of each crown sipe 42 to the groove depth HT of the circumferential narrow groove 26 is not less than 0.30 and not greater than 0.85, and the crown sipes 42 are deeper than the body portion 28 of the circumferential narrow groove 26.

As described above, the groove depth HT of the circumferential narrow groove 26 is equal to the groove depth DGc of the crown circumferential main groove 16, or the circumferential narrow groove 26 is shallower than the crown circumferential main groove 16. The crown sipes 42 are shallower than the crown circumferential main groove 16.

In the tire 2, from the viewpoint that the circumferential narrow groove 26 can sufficiently exhibit its function, the position of the shoulder circumferential main groove 14 relative to the end TE of the tread surface 6 and the position of the circumferential narrow groove 26 closest to the shoulder circumferential main groove 14 are controlled.

In FIG. 10, a length indicated by a double-headed arrow WS is the distance in the axial direction from the end TE of the tread surface 6 to the groove bottom 14T of the shoulder circumferential main groove 14. A length indicated by a double-headed arrow WH is the distance in the axial direction from the end TE of the tread surface 6 to the groove bottom 26T of the circumferential narrow groove 26.

In the tire 2, it is preferable that in the axial direction, the position of the groove bottom 14T of the shoulder circumferential main groove 14 coincides with a position corresponding to half the distance WH in the axial direction from the end TE of the tread surface 6 to the groove bottom 26T of the circumferential narrow groove 26, or the groove bottom 14T of the shoulder circumferential main groove 14 is located axially inward of the position corresponding to half the distance WH in the axial direction. Accordingly, the outer crown narrow land portion 40 located between the shoulder circumferential main groove 14 and the circumferential narrow groove 26 is formed with an appropriate volume. As soon as a load acts on the outer crown narrow land portion 40, the outer crown narrow land portion 40 can be deformed, and the pair of wall surfaces 26W of the circumferential narrow groove 26 can come into contact with each other at the body portion main body 34. Since deformation of the crown portion Cr is effectively suppressed, the tire 2 can have reduced rolling resistance.

In the tire 2, the outer crown narrow land portion 40 located between the shoulder circumferential main groove 14 and the circumferential narrow groove 26 is not provided with a longitudinal groove extending continuously in the circumferential direction. In such a case, it is more preferable that as shown in FIG. 10, the groove bottom 14T of the shoulder circumferential main groove 14 is located axially inward of the position corresponding to half the distance WH in the axial direction. Specifically, the ratio (WS/WH) of the distance WS in the axial direction to the distance WH in the axial direction is more preferably not less than 0.60. From the viewpoint of ensuring the stiffness of the outer crown narrow land portion 40, the ratio (WS/WH) is preferably not greater than 0.80.

As shown in FIG. 4, the circumferential narrow groove 26 extends in the circumferential direction while meandering rather than extending straight. In particular, the circumferential narrow groove 26 of the tire 2 includes inner narrow grooves 68 closer to the equator plane CL, outer narrow grooves 70 closer to the end TE of the tread surface 6, and connection narrow grooves 72 connecting the inner narrow grooves 68 and the outer narrow grooves 70. The inner narrow grooves 68 and the outer narrow grooves 70 are arranged so as to overlap the maximum width center line LCM.

Among the connection narrow grooves 72, the connection narrow grooves 72 connecting the inner narrow grooves 68 and the outer narrow grooves 70 located on the first side of the inner narrow grooves 68 in the circumferential direction are also referred to as first connection narrow grooves 72a. The connection narrow grooves 72 connecting the inner narrow grooves 68 and the outer narrow grooves 70 located on the second side of the inner narrow grooves 68 in the circumferential direction are also referred to as second connection narrow grooves 72b.

When a unit configured by connecting the first connection narrow groove 72a, the inner narrow groove 68, the second connection narrow groove 72b, and the outer narrow groove 70 in this order is defined as a groove unit, the circumferential narrow groove 26 is formed by connecting a plurality of such groove units in the circumferential direction. The inner narrow grooves 68 and the outer narrow grooves 70 are arranged alternately in the circumferential direction.

When a force acts on the crown land portion 24 and the crown land portion 24 is deformed, the wall surfaces of the circumferential narrow groove 26 come into contact with each other at the body portion main body 34 thereof. Since the circumferential narrow groove 26 extends in the circumferential direction while meandering, the wall surfaces thereof effectively engage each other. The crown narrow land portions 36 located on both sides of the circumferential narrow groove 26 restrain each other. The apparent stiffness of the crown land portion 24 is increased. Deformation of the crown land portion 24 is effectively suppressed. The tire 2 can have further reduced rolling resistance. From this viewpoint, it is preferable that the circumferential narrow groove 26 includes the inner narrow grooves 68, the outer narrow grooves 70, and the connection narrow grooves 72 connecting the inner narrow grooves 68 and the outer narrow grooves 70, and the inner narrow grooves 68 and the outer narrow grooves 70 are arranged alternately in the circumferential direction.

The inner crown sipes 46 shown in FIG. 4 are inclined with respect to the axial direction. The outer crown sipes 50 are also inclined with respect to the axial direction. The crown sipes 42 are inclined with respect to the axial direction. The crown sipes 42 may extend in the axial direction.

The crown sipes 42 extending in the axial direction or inclined with respect to the axial direction can effectively function as edge components. The tire 2 can have improved wet performance. From this viewpoint, it is preferable that the crown sipes 42 extend in the axial direction or are inclined with respect to the axial direction. It is more preferable that the crown sipes 42 are inclined with respect to the axial direction.

In FIG. 4, an angle θuc represents an angle of the inner crown sipe 46 with respect to the axial direction. The angle θuc is also referred to as inclination angle of the inner crown sipe 46. An angle θsc represents an angle of the outer crown sipe 50 with respect to the axial direction. The angle θsc is also referred to as inclination angle of the outer crown sipe 50.

From the viewpoint that the inner crown sipe 46 can effectively function as an edge component, the inclination angle θuc of the inner crown sipe 46 is preferably not less than 0 degrees and more preferably not less than 5 degrees. From the same viewpoint, the inclination angle θuc is preferably not greater than 45 degrees.

From the viewpoint that the outer crown sipe 50 can effectively function as an edge component, the inclination angle θsc of the outer crown sipe 50 is preferably not less than 0 degrees and more preferably not less than 5 degrees. From the same viewpoint, the inclination angle θsc is preferably not greater than 45 degrees.

As shown in FIG. 4, the ends of the inner crown sipes 46 on the end TE side of the tread surface 6 are located on the second side in the circumferential direction with respect to the ends of the inner crown sipes 46 on the equator plane CL side. The ends of the outer crown sipes 50 on the end TE side of the tread surface 6 are located on the first side in the circumferential direction with respect to the ends of the outer crown sipes 50 on the equator plane CL side. The direction of inclination of the inner crown sipes 46 is opposite to the direction of inclination of the outer crown sipes 50.

**In** the tire 2, when a force acts on the crown land portion 24 from the equator plane CL side toward the end TE of the tread surface 6, the wall surfaces of each outer crown sipe 50 come into contact with and support each other. The outer crown narrow land portion 40 can effectively restrain the movement of the inner crown narrow land portion 38. Accordingly, the apparent stiffness of the crown land portion 24 is increased. When a force acts on the crown land portion 24 from the end TE side of the tread surface 6 toward the equator plane CL, the wall surfaces of each inner crown sipe 46 come into contact with and support each other. The inner crown narrow land portion 38 can effectively restrain the movement of the outer crown narrow land portion 40. In this case as well, the apparent stiffness of the crown land portion 24 is increased. In both cases, deformation of the crown land portion 24 is effectively suppressed. The tire 2 can have further reduced rolling resistance. From this viewpoint, it is preferable that the direction of inclination of the crown sipes 42 on the inner crown narrow land portion 38 is opposite to the direction of inclination of the crown sipes 42 on the outer crown narrow land portion 40.

From the viewpoint of being able to effectively suppress a decrease in wet performance due to wear while reducing rolling resistance, it is more preferable that the crown sipes 42 provided on each of the two crown narrow land portions 36 are inclined with respect to the axial direction, the direction of inclination of the inner crown sipes 46 is opposite to the direction of inclination of the outer crown sipes 50, each inner crown sipe 46 connects the second peak 14b of the crown circumferential main groove 16 and the outer narrow groove 70 of the circumferential narrow groove 26, and each outer crown sipe 50 connects the inner narrow groove 68 of the circumferential narrow groove 26 and the shoulder circumferential main groove 14.

As shown in FIG. 7, each of the inner shoulder lateral groove 64 and the outer shoulder lateral groove 66 is inclined with respect to the axial direction. The shoulder land portion 22 may be formed such that the inner shoulder lateral groove 64 extends in the axial direction. The shoulder land portion 22 may be formed such that the outer shoulder lateral groove 66 extends in the axial direction.

Each of the inner shoulder lateral groove 64 and the outer shoulder lateral groove 66 functions as an edge component. Each shoulder lateral groove 54 including the inner shoulder lateral groove 64 and the outer shoulder lateral groove 66 can contribute to improvement of wet performance. From the viewpoint that the tire 2 can have improved wet performance, it is preferable that the shoulder land portion 22 has the shoulder lateral grooves 54 traversing the shoulder land portion 22, each shoulder lateral groove 54 includes the inner shoulder lateral groove 64 located on the equator plane CL side and the outer shoulder lateral groove 66 located on the end TE side of the tread surface 6, and each of the inner shoulder lateral groove 64 and the outer shoulder lateral groove 66 extends in the axial direction or is inclined with respect to the axial direction.

In FIG. 7, an angle θuy represents an angle of the inner shoulder lateral groove 64 with respect to the axial direction. The angle θuy is also referred to as inclination angle of the inner shoulder lateral groove 64. An angle θsy represents an angle of the outer shoulder lateral groove 66 with respect to the axial direction. The angle θsy is also referred to as inclination angle of the outer shoulder lateral groove 66.

From the viewpoint that the inner shoulder lateral groove 64 can effectively function as an edge component, the inclination angle θuy of the inner shoulder lateral groove 64 is preferably not less than 0 degrees and more preferably not less than 5 degrees. From the same viewpoint, the inclination angle θuy is preferably not greater than 45 degrees.

From the viewpoint that the outer shoulder lateral groove 66 can effectively function as an edge component, the inclination angle θsy of the outer shoulder lateral groove 66 is preferably not less than 0 degrees and more preferably not less than 5 degrees. From the same viewpoint, the inclination angle θsy is preferably not greater than 45 degrees.

As shown in FIG. 7, the inclination angle θuy of the inner shoulder lateral groove 64 is larger than the inclination angle θsy of the outer shoulder lateral groove 66. Accordingly, the shoulder lateral groove 54 as a whole can effectively function as an edge component. The tire 2 can effectively improve wet performance. From this viewpoint, it is preferable that the inclination angle θuy of the inner shoulder lateral groove 64 is larger than the inclination angle θsy of the outer shoulder lateral groove 66. In this case, it is further preferable that the shoulder longitudinal groove 58 is located on the end TE side of the tread surface 6 with respect to the maximum width center line LSM of the shoulder land portion 22.

As is obvious from the above description, according to the present invention, a heavy duty tire that can have reduced rolling resistance while suppressing a decrease in wet performance due to wear and can achieve reduction of the risk of occurrence of uneven wear, is obtained.

The above-described technology capable of reducing rolling resistance while suppressing a decrease in wet performance due to wear and achieving reduction of the risk of occurrence of uneven wear can be applied to various tires.

## Claims

1. A heavy duty tire (2) comprising a tread, wherein
the tread (4) has an outer circumferential surface including a tread surface (6) configured to come into contact with a road surface,
a plurality of circumferential main grooves (12) are formed on the tread (4) so as to extend continuously in a circumferential direction, whereby a plurality of land portions (20) are formed in the tread (4) so as to be aligned in an axial direction,
the plurality of circumferential main grooves (12) include a pair of shoulder circumferential main grooves (14) each located on an outermost side in the axial direction,
the plurality of land portions (20) include a pair of shoulder land portions (22) each located on the outermost side in the axial direction,
a portion of the tread (4) between a first shoulder circumferential main groove (14) and a second shoulder circumferential main groove (14) which are the pair of shoulder circumferential main grooves (14) is a crown portion (Cr), and a portion of the tread (4) between each of the shoulder circumferential main grooves (14) and an end (TE) of the tread surface (6) is the shoulder land portion (22),
at least one circumferential narrow groove (26) is formed on the crown portion (Cr),
the at least one circumferential narrow groove (26) includes a body portion (28) including a groove opening (26M) of the circumferential narrow groove (26), and an enlarged width portion (30) including a groove bottom (26T) of the circumferential narrow groove (26),
the body portion (28) includes a body portion main body (34) extending straight,
the enlarged width portion (30) is connected to the body portion main body (34), and has a portion where the enlarged width portion (30) has a maximum groove width (WM), between the body portion main body (34) and the groove bottom (26T),
the tread surface (6) includes a land surface (10C) of the crown portion (Cr) and land surfaces (10S) of the shoulder land portions (22), and
a line of intersection of the land surface (10C) of the crown portion (Cr) and an equator plane (CL) is an equator (PC),
**characterized in that**
in a meridian cross-section of the tire (2), when the tire is fitted on the standardized rim, the internal pressure of the tire is adjusted to 5% of the standardized internal pressure, and no load is applied to the tire, a contour of the land surface (10C) of the crown portion (Cr) is represented by an arc having a center on the equator plane (CL) and having a radius of not less than 400 mm and preferably not less than 500 mm, and each of contours of the land surfaces (10S) of the shoulder land portions (22) is represented by a straight line or an arc having a curvature of not greater than 0.002 mm⁻¹ and preferably not greater than 0.001 mm⁻¹, and
when a point of intersection of an extension line (EXL) of the arc representing the contour of the land surface (10C) of the crown portion (Cr) and a straight line (RL) passing through the end (TE) of the tread surface (6) and extending in a radial direction is defined as a reference end (BTE) of the tread surface (6), a ratio (D1/D2) of a distance D1 in the radial direction from the equator (PC) to the end (TE) of the tread surface (6) to a distance D2 in the radial direction from the equator (PC) to the reference end (BTE) of the tread surface (6) is not less than 0.60 and not greater than 1.70 and preferably not less than 0.65 and not greater than 1.65.

2. The heavy duty tire (2) according to claim 1, wherein
a groove width (WD) of the body portion main body (34) is not greater than 2.5 mm, and
a ratio (WD/WM) of the groove width (WD) of the body portion main body (34) to the maximum groove width (WM) of the enlarged width portion (30) is not less than 0.10 and not greater than 0.40.

3. The heavy duty tire (2) according to claim 1 or 2, wherein a ratio (HM/HT) of a groove depth (HM) from the groove opening (26M) of the circumferential narrow groove (26) to a position (PM) at which the enlarged width portion (30) has the maximum groove width (WM), to a groove depth (HT) of the circumferential narrow groove (26) is not less than 0.80 and not greater than 0.90.

4. The heavy duty tire (2) according to any one of claims 1 to 3, wherein
in a ground-contact surface obtained when the tire (2) is fitted on a standardized rim, an internal pressure of the tire (2) is adjusted to a standardized internal pressure, a standardized load is applied to the tire (2), and the tire (2) is brought into contact with a flat road surface, a length of the ground-contact surface at a position corresponding to 97% of a maximum ground-contact width is a ground-contact length L1, and a length of the ground-contact surface at a position corresponding to 70% of the maximum ground-contact width is a ground-contact length L2, and
a ratio (L2/L1) of the ground-contact length L2 to the ground-contact length L1 is not less than 0.90 and not greater than 1.10 and preferably not less than 0.95 and not greater than 1.05.

5. The heavy duty tire (2) according to claim 4, wherein
a length of the ground-contact surface at a position corresponding to a center of the maximum ground-contact width is a ground-contact length L3, and
a ratio (L3/L2) of the ground-contact length L3 to the ground-contact length L2 is not less than 1.00 and not greater than 1.20 and preferably not less than 1.05 and not greater than 1.15.

6. The heavy duty tire (2) according to any one of claims 1 to 5, wherein
the circumferential narrow groove (26) divides a crown land portion (24) into two crown narrow land portions (36),
each of the two crown narrow land portions (36) has a plurality of crown sipes (42) traversing the crown narrow land portion (36), and
the circumferential narrow groove (26) is deeper than the crown sipes (42).

7. The heavy duty tire (2) according to any one of claims 1 to 6, wherein the crown sipes (42) are deeper than the body portion (28) of the circumferential narrow groove (26).

8. The heavy duty tire (2) according to any one of claims 1 to 7, wherein
the plurality of circumferential main grooves (12) include a crown circumferential main groove (16) located on the equator plane (CL), and
a groove depth (HT) of the circumferential narrow groove (26) is equal to a groove depth (DGc) of the crown circumferential main groove (16), or the circumferential narrow groove (26) is shallower than the crown circumferential main groove (16).

9. The heavy duty tire (2) according to any one of claims 1 to 8, wherein, in the axial direction, a position of a groove bottom (14T) of the shoulder circumferential main groove (14) coincides with a position corresponding to half of a distance WH in the axial direction from the end (TE) of the tread surface (6) to the groove bottom (26T) of the circumferential narrow groove (26), or the groove bottom of the shoulder circumferential main groove (14) is located axially inward of the position corresponding to half of the distance WH in the axial direction.

10. The heavy duty tire (2) according to any one of claims 1 to 9, wherein
the circumferential narrow groove (26) includes inner narrow grooves (68) closer to the equator plane (CL), outer narrow grooves (70) closer to the end (TE) of the tread surface (6), and connection narrow grooves (72) connecting the inner narrow grooves (68) and the outer narrow grooves (70), and
the inner narrow grooves (68) and the outer narrow grooves (70) are arranged alternately in the circumferential direction.

11. The heavy duty tire (2) according to any one of claims 1 to 10, wherein, when, of the two crown narrow land portions (36), the crown narrow land portion (36) closer to the equator plane (CL) is an inner crown narrow land portion (38), and the crown narrow land portion (36) closer to the end (TE) of the tread surface (6) is an outer crown narrow land portion (40), a direction of inclination of the crown sipes (42) on the inner crown narrow land portion (38) is opposite to a direction of inclination of the crown sipes (42) on the outer crown narrow land portion (40).

## Patentansprüche

1. Schwerlastreifen (2) mit einer Lauffläche, wobei
die Lauffläche (4) eine Außenumfangsfläche aufweist, die eine Laufflächen-Oberfläche (6) umfasst, die so konfiguriert ist, dass sie mit einer Straßenoberfläche in Kontakt kommt,
eine Vielzahl von Umfangshauptrillen (12) an der Lauffläche (4) so ausgebildet sind, dass sie sich kontinuierlich in einer Umfangsrichtung erstrecken, wodurch eine Vielzahl von Landabschnitten (20) in der Lauffläche (4) so ausgebildet sind, dass sie in einer axialen Richtung ausgerichtet sind,
die Vielzahl von Umfangshauptrillen (12) ein Paar Schulterumfangshauptrillen (14) umfasst, die sich jeweils an einer äußersten Seite in der axialen Richtung befinden,
die Vielzahl von Landabschnitten (20) ein Paar Schulterlandabschnitte (22) umfasst, die sich jeweils an der äußersten Seite in der axialen Richtung befinden,
ein Abschnitt der Lauffläche (4) zwischen einer ersten Schulterumfangshauptrille (14) und einer zweiten Schulterumfangshauptrille (14), die das Paar Schulterumfangshauptrillen (14) sind, ein Kronenabschnitt (Cr) ist, und ein Abschnitt der Lauffläche (4) zwischen jeder der Schulterumfangshauptrillen (14) und einem Ende (TE) der Laufflächen-Oberfläche (6) der Schulterlandabschnitt (22) ist,
mindestens eine schmale Umfangsrille (26) an dem Kronenabschnitt (Cr) ausgebildet ist,
die mindestens eine schmale Umfangsrille (26) einen Körperabschnitt (28), der eine Rillenöffnung (26M) der schmalen Umfangsrille (26) umfasst, und einen Abschnitt (30) mit vergrößerter Breite umfasst, der einen Rillenboden (26T) der schmalen Umfangsrille (26) umfasst,
der Körperabschnitt (28) einen Körperabschnitthauptkörper (34) umfasst, der sich gerade erstreckt,
der Abschnitt (30) mit vergrößerter Breite mit dem Körperabschnitthauptkörper (34) verbunden ist und einen Abschnitt, an dem der Abschnitt (30) mit vergrößerter Breite eine maximale Rillenbreite (WM) aufweist, zwischen dem Körperabschnitthauptkörper (34) und dem Rillenboden (26T) aufweist,
die Laufflächen-Oberfläche (6) eine Landfläche (10C) des Kronenabschnitts (Cr) und Landflächen (10S) der Schulterlandabschnitte (22) umfasst, und
eine Schnittlinie der Landfläche (10C) des Kronenabschnitts (Cr) und einer Äquatorebene (CL) ein Äquator (PC) ist,
**dadurch gekennzeichnet, dass**
in einem Meridianquerschnitt des Reifens (2), wenn der Reifen auf die standardisierte Felge aufgezogen ist, der Innendruck des Reifens auf 5 % des standardisierten Innendrucks eingestellt ist und keine Last auf den Reifen aufgebracht wird, eine Kontur der Landfläche (10C) des Kronenabschnitts (Cr) durch einen Bogen dargestellt ist, der eine Mitte auf der Äquatorebene (CL) aufweist und einen Radius von nicht weniger als 400 mm und vorzugsweise nicht weniger als 500 mm aufweist, und jede der Konturen der Landflächen (10S) der Schulterlandabschnitte (22) durch eine gerade Linie oder einen Bogen mit einer Krümmung von nicht mehr als 0,002 mm⁻¹ und vorzugsweise nicht mehr als 0,001 mm⁻¹ dargestellt ist, und
wenn ein Schnittpunkt einer Verlängerungslinie (EXL) des Bogens, der die Kontur der Landfläche (10C) des Kronenabschnitts (Cr) darstellt, und einer geraden Linie (RL), die durch das Ende (TE) der Laufflächen-Oberfläche (6) verläuft und sich in einer radialen Richtung erstreckt, als ein Bezugsende (BTE) der Laufflächen-Oberfläche (6) definiert ist, ein Verhältnis (D1/D2) eines Abstands D1 in der radialen Richtung von dem Äquator (PC) zu dem Ende (TE) der Laufflächen-Oberfläche (6) zu einem Abstand D2 in der radialen Richtung von dem Äquator (PC) zu dem Bezugsende (BTE) der Laufflächen-Oberfläche (6) nicht weniger als 0,60 und nicht mehr als 1,70 und vorzugsweise nicht weniger als 0,65 und nicht mehr als 1,65 beträgt.

2. Schwerlastreifen (2) nach Anspruch 1, wobei
eine Rillenbreite (WD) des Körperabschnitthauptkörpers (34) nicht mehr als 2,5 mm beträgt, und
ein Verhältnis (WD/WM) der Rillenbreite (WD) des Körperabschnitthauptkörpers (34) zu der maximalen Rillenbreite (WM) des Abschnitts (30) mit vergrößerter Breite nicht weniger als 0,10 und nicht mehr als 0,40 beträgt.

3. Schwerlastreifen (2) nach Anspruch 1 oder 2, wobei ein Verhältnis (HM/HT) einer Rillentiefe (HM) von der Rillenöffnung (26M) der schmalen Umfangsrille (26) zu einer Position (PM), an der der Abschnitt (30) mit vergrößerter Breite die maximale Rillenbreite (WM) aufweist, zu einer Rillentiefe (HT) der schmalen Umfangsrille (26) nicht weniger als 0,80 und nicht mehr als 0,90 beträgt.

4. Schwerlastreifen (2) nach einem der Ansprüche 1 bis 3, wobei
in einer Bodenkontaktfläche, die erhalten wird, wenn der Reifen (2) auf eine standardisierte Felge aufgezogen ist, ein Innendruck des Reifens (2) auf einen standardisierten Innendruck eingestellt wird, eine standardisierte Last auf den Reifen (2) aufgebracht wird und der Reifen (2) mit einer flachen Straßenoberfläche in Kontakt gebracht wird, eine Länge der Bodenkontaktfläche an einer Position, die 97 % einer maximalen Bodenkontaktbreite entspricht, eine Bodenkontaktlänge L1 ist und eine Länge der Bodenkontaktfläche an einer Position, die 70 % der maximalen Bodenkontaktbreite entspricht, eine Bodenkontaktlänge L2 ist, und
ein Verhältnis (L2/L1) der Bodenkontaktlänge L2 zu der Bodenkontaktlänge L1 nicht weniger als 0,90 und nicht mehr als 1,10 und vorzugsweise nicht weniger als 0,95 und nicht mehr als 1,05 beträgt.

5. Schwerlastreifen (2) nach Anspruch 4, wobei
eine Länge der Bodenkontaktfläche an einer Position, die einer Mitte der maximalen Bodenkontaktbreite entspricht, eine Bodenkontaktlänge L3 ist, und
ein Verhältnis (L3/L2) der Bodenkontaktlänge L3 zu der Bodenkontaktlänge L2 nicht weniger als 1,00 und nicht mehr als 1,20 und vorzugsweise nicht weniger als 1,05 und nicht mehr als 1,15 beträgt.

6. Schwerlastreifen (2) nach einem der Ansprüche 1 bis 5, wobei
die schmale Umfangsrille (26) einen Kronenlandabschnitt (24) in zwei schmale Kronenlandabschnitte (36) unterteilt,
jeder der zwei schmalen Kronenlandabschnitte (36) eine Vielzahl von Kronenfeinschnitten (42) aufweist, die den schmalen Kronenlandabschnitt (36) queren, und
die schmale Umfangsrille (26) tiefer als die Kronenfeinschnitte (42) ist.

7. Schwerlastreifen (2) nach einem der Ansprüche 1 bis 6, wobei die Kronenfeinschnitte (42) tiefer als der Körperabschnitt (28) der schmalen Umfangsrille (26) sind.

8. Schwerlastreifen (2) nach einem der Ansprüche 1 bis 7, wobei
die Vielzahl von Umfangshauptrillen (12) eine Kronenumfangshauptrille (16) umfasst, die sich auf der Äquatorebene (CL) befindet, und
eine Rillentiefe (HT) der schmalen Umfangsrille (26) gleich einer Rillentiefe (DGc) der Kronenumfangshauptrille (16) ist oder die schmale Umfangsrille (26) flacher als die Kronenumfangshauptrille (16) ist.

9. Schwerlastreifen (2) nach einem der Ansprüche 1 bis 8, wobei in der axialen Richtung eine Position eines Rillenbodens (14T) der Schulterumfangshauptrille (14) mit einer Position übereinstimmt, die der Hälfte eines Abstands WH in der axialen Richtung vom Ende (TE) der Laufflächen-Oberfläche (6) zum Rillenboden (26T) der schmalen Umfangsrille (26) entspricht, oder der Rillenboden der Schulterumfangshauptrille (14) sich axial innen von der Position befindet, die der Hälfte des Abstands WH in der axialen Richtung entspricht.

10. Schwerlastreifen (2) nach einem der Ansprüche 1 bis 9, wobei
die schmale Umfangsrille (26) innere schmale Rillen (68) näher an der Äquatorebene (CL), äußere schmale Rillen (70) näher am Ende (TE) der Laufflächen-Oberfläche (6) und schmale Verbindungsrillen (72) umfasst, die die inneren schmalen Rillen (68) und die äußeren schmalen Rillen (70) verbinden, und
die inneren schmalen Rillen (68) und die äußeren schmalen Rillen (70) abwechselnd in der Umfangsrichtung angeordnet sind.

11. Schwerlastreifen (2) nach einem der Ansprüche 1 bis 10, wobei, wenn von den zwei schmalen Kronenlandabschnitten (36) der schmale Kronenlandabschnitt (36) näher an der Äquatorebene (CL) ein innerer schmaler Kronenlandabschnitt (38) ist und der schmale Kronenlandabschnitt (36) näher am Ende (TE) der Laufflächen-Oberfläche (6) ein äußerer schmaler Kronenlandabschnitt (40) ist, eine Neigungsrichtung der Kronenfeinschnitte (42) an dem inneren schmalen Kronenlandabschnitt (38) entgegengesetzt zu einer Neigungsrichtung der Kronenfeinschnitte (42) an dem äußeren schmalen Kronenlandabschnitt (40) ist.

## Revendications

1. Pneumatique pour service intensif (2) comprenant une bande de roulement, dans lequel
la bande de roulement (4) a une surface circonférentielle extérieure incluant une surface de bande de roulement (6) configurée pour venir en contact avec une surface routière,
une pluralité de rainures principales circonférentielles (12) sont formées sur la bande de roulement (4) de façon à s'étendre en continu dans une direction circonférentielle, moyennant quoi une pluralité de portions en relief (20) sont formées dans la bande de roulement (4) de façon à être alignées dans une direction axiale,
la pluralité de rainures principales circonférentielles (12) incluent une paire de rainures principales circonférentielles d'épaulement (14) situées chacune sur un côté le plus extérieur dans la direction axiale,
la pluralité de portions en relief (20) incluent une paire de portions en relief d'épaulement (22) situées chacune sur le côté le plus extérieur dans la direction axiale,
une portion de la bande de roulement (4) entre une première rainure principale circonférentielle (14) et une seconde rainure principale circonférentielle d'épaulement (14) qui sont la paire de rainures principales circonférentielles d'épaulement (14) est une portion de couronne (Cr), et une portion de la bande de roulement (4) entre chacune des rainures principales circonférentielles d'épaulement (14) et une extrémité (TE) de la surface de bande de roulement (6) est la portion en relief d'épaulement (22),
au moins une rainure étroite circonférentielle (26) est formée sur la portion de couronne (Cr),
ladite au moins une rainure étroite circonférentielle (26) inclut une portion formant corps (28) incluant une ouverture de rainure (26M) de la rainure étroite circonférentielle (26), et une portion de largeur agrandie (30) incluant un fond de rainure (26T) de la rainure étroite circonférentielle (26),
la portion formant corps (28) inclut un corps principal de portion formant corps (34) s'étendant de manière rectiligne,
la portion de largeur agrandie (30) est connectée au corps principal de portion formant corps (34), et a une portion où la portion de largeur agrandie (30) a une largeur de rainure maximum (WM), entre le corps principal de portion formant corps (34) et le fond de rainure (26T),
la surface de bande de roulement (6) inclut une surface en relief (10C) de la portion de couronne (Cr) et des surfaces en relief (10S) des portions en relief d'épaulement (22), et
une ligne intersection de la surface en relief (10C) de la portion de couronne (Cr) et d'un plan d'équateur (CL) est un équateur (PC),
**caractérisé en ce que**
dans une section transversale méridienne du pneumatique (2), quand le pneumatique est monté sur la jante standardisée, que la pression interne du pneumatique est ajustée à 5 % de la pression interne standardisée, et qu'aucune charge n'est appliquée sur le pneumatique, un contour de la surface en relief (10C) de la portion de couronne (Cr) est représenté par un arc ayant un centre sur le plan d'équateur (CL) et ayant un rayon qui n'est pas inférieur à 400 mm et, de préférence, qui n'est pas inférieur à 500 mm, et chacun des contours des surfaces en relief (10S) des portions en relief d'épaulement (22) est représenté par une ligne droite ou un arc ayant une courbure qui n'est pas supérieure à 0,002 mm⁻¹ et, de préférence, qui n'est pas supérieure à 0,001 mm⁻¹, et
quand un point d'intersection d'une ligne d'extension (EXL) de l'arc représentant le contour de la surface en relief (10C) de la portion de couronne (Cr) et d'une ligne droite (RL) passant par l'extrémité (TE) de la surface de bande de roulement (6) et s'étendant dans une direction radiale est défini comme extrémité de référence (BTE) de la surface de bande de roulement (6), un rapport (D1/D2) d'une distance D1 dans la direction radiale depuis l'équateur (PC) jusqu'à l'extrémité (TE) de la surface de bande de roulement (6) sur une distance D2 dans la direction radiale depuis l'équateur (PC) jusqu'à l'extrémité de référence (BTE) de la surface de bande de roulement (6) n'est pas inférieur à 0,60 et n'est pas supérieur à 1,70 et, de préférence, n'est pas inférieur à 0,65 et pas supérieur à 1,65.

2. Pneumatique pour service intensif (2) selon la revendication 1, dans lequel une largeur de rainure (WD) du corps principal de portion formant corps (34) n'est pas supérieure à 2,5 mm, et
un rapport (WD/WM) de la largeur de rainure (WD) du corps principal de portion formant corps (34) sur la largeur de rainure maximum (WM) de la portion de largeur agrandie (30) n'est pas inférieur à 0,10 et n'est pas supérieur à 0,40.

3. Pneumatique pour service intensif (2) selon la revendication 1 ou 2, dans lequel un rapport (HM/HT) d'une profondeur de rainure (HM) depuis l'ouverture de rainure (26M) de la rainure étroite circonférentielle (26) jusqu'à une position (PM) à laquelle la portion de largeur agrandie (30) a la largeur de rainure maximum (WM), sur une profondeur de rainure (HT) de la rainure étroite circonférentielle (26) n'est pas inférieur à 0,80 et n'est pas supérieur à 0,90.

4. Pneumatique pour service intensif (2) selon l'une quelconque des revendications 1 à 3, dans lequel
dans une surface de contact au sol obtenue quand le pneumatique (2) est monté sur une jante standardisée, qu'une pression interne du pneumatique (2) est ajustée à une pression interne standardisée, qu'une charge standardisée est appliquée sur le pneumatique (2), et que le pneumatique (2) est amené en contact avec une surface routière plate, une longueur de la surface de contact au sol à une position correspondant à 97 % d'une largeur de contact au sol maximum est une longueur de contact au sol L1, et une longueur de la surface de contact au sol à une position correspondant à 70 % de la largeur de contact au sol maximum est une longueur de contact au sol L2, et
un rapport (L2/L1) de la longueur de contact au sol L2 sur la longueur de contact au sol L1 n'est pas inférieur à 0,90 et n'est pas supérieur à 1,10, et, de préférence, n'est pas inférieur à 0,95 et n'est pas supérieur à 1,05.

5. Pneumatique pour service intensif (2) selon la revendication 4, dans lequel
une longueur de la surface de contact au sol à une position correspondant à un centre de la largeur de contact au sol maximum est une longueur de contact au sol L3, et
un rapport (L3/L2) de la longueur de contact au sol L3 sur la longueur de contact au sol L2 n'est pas inférieur à 1,00 et n'est pas supérieur à 1,20 et, de préférence, n'est pas inférieur à 1,05 et n'est pas supérieur à 1,15.

6. Pneumatique pour service intensif (2) selon l'une quelconque des revendications 1 à 5, dans lequel
la rainure étroite circonférentielle (26) divise une portion en relief de couronne (24) en deux portions en relief étroites de couronne (36),
chacune des deux portions en relief étroites de couronne (36) a une pluralité de fentes de couronne (42) traversant la portion en relief étroite de couronne (36), et
la rainure étroite circonférentielle (26) est plus profonde que les fentes de couronne (32).

7. Pneumatique pour service intensif (2) selon l'une quelconque des revendications 1 à 6, dans lequel les fentes de couronne (42) sont plus profondes que la portion formant corps (28) de la rainure étroite circonférentielle (26).

8. Pneumatique pour service intensif (2) selon l'une quelconque des revendications 1 à 7, dans lequel
la pluralité de rainures principales circonférentielles (12) incluent une rainure principale circonférentielle de couronne (16) située sur le plan d'équateur (CL), et
une profondeur de rainure (HT) de la rainure étroite circonférentielle (26) est égale à une profondeur de rainure (DGc) de la rainure principale circonférentielle de couronne (16), ou la rainure étroite circonférentielle (26) est encore moins profonde que la rainure principale circonférentielle de couronne (16).

9. Pneumatique pour service intensif (2) selon l'une quelconque des revendications 1 à 8, dans lequel, dans la direction axiale, une position d'un fond de rainure (14T) de la rainure principale circonférentielle d'épaulement (14) coïncide avec une position correspondant à la moitié d'une distance depuis l'extrémité (TE) de la surface de bande de roulement (6) jusqu'au fond de rainure (26T) de la rainure étroite circonférentielle (26), ou le fond de rainure de la rainure principale circonférentielle d'épaulement (14) est situé axialement à l'intérieur de la position correspondant à la moitié de la distance **WH** dans la direction axiale.

10. Pneumatique pour service intensif (2) selon l'une quelconque des revendications 1 à 9, dans lequel
la rainure étroite circonférentielle (26) inclut des rainures étroites intérieures (68) plus proches du plan d'équateur (CL), des rainures étroites extérieures (70) plus proches de l'extrémité (TE) de la surface de bande de roulement (6), et des rainures étroites de connexion (72) connectant les rainures étroites intérieures (68) et les rainures étroites extérieures (70), et
les rainures étroites intérieures (68) et les rainures étroites extérieures (70) sont agencées en alternance dans la direction circonférentielle.

11. Pneumatique pour service intensif (2) selon l'une quelconque des revendications 1 à 10, dans lequel, quand, parmi les deux portions en relief étroites de couronne (36), la portion en relief étroite de couronne (36) plus proche du plan d'équateur (CL) est une portion en relief étroite de couronne intérieure (38), et la portion en relief étroite de couronne (36) plus proche de l'extrémité (TE) de la surface de bande de roulement (6) est une portion en relief étroite de couronne extérieure (40), une direction d'inclinaison des fentes de couronne (42) sur la portion en relief étroite de couronne intérieure (38) est opposée à une direction d'inclinaison des fentes de couronne (42) sur la portion en relief étroite de couronne extérieure (40).
